# EUROPEAN PATENT APPLICATION

(11) **EP 1 686 456 A2**
(43) Date of publication of application: **02.08.2006**
(21) Application number: 05257345.8
(22) Date of filing: 29.11.2005
(51) Int. Cl.: G06F 3/12

(54) **System, method and program for resource management, software authentication and resource conversion table generation**

(30) Priority: 01.02.2005 JP 2005024983; 25.08.2005 JP 2005244161
(71) Applicant: SEIKO EPSON CORPORATION, Shinjuku-ku, Tokyo 163-0811 (JP)
(72) Inventor: Taniguchi, Shinya c/o Seiko Epson Corporation, Suwa-shi Nagano-ken 392-8502 (JP); Fukao, Akihiot c/o Seiko Epson Corporation, Suwa-shi Nagano-ken 392-8502 (JP)
(74) Representative: Sturt, Clifford Mark

(57) **Abstract**

A resource management system, which manages resources to be utilized by a functional module, includes a resource measuring unit that measures a resource amount to be utilized by the functional module in a first execution environment, a resource converting unit that converts the resource amount measured by the resource measuring unit into a resource amount to be utilized by the functional module in a second execution environment, a resource limitation information acquiring unit that acquires resource limitation information indicating a resource limitation condition, and a resource limitation notifying unit that performs a notification of resource limitation on the basis of the resource amount converted by the resource converting unit and the resource limitation information acquired by the resource limitation information acquiring unit.

## Description

The present invention relates to a system, a program, and a method which manage resources. More particularly, the invention relates to a resource management system which is suitable for facilitating software development and for developing software with high stability through verification of a resource amount to be utilized by software in its execution environment before introduction of a resource into its execution environment, to a resource conversion table generation system, to a software authentication system, to a resource management program, to a resource conversion table generation program, to a software authentication program, to a resource management method, to a resource conversion table generation method, and to a software authentication method.

In a built-in apparatus, such as a printer, software, which is called a built-in application, is incorporated so as to control the operation of the apparatus. In general, however, as regards the creation of the built-in application, an exclusive development environment and exclusive hardware are required, and thus it is impossible for anyone to simply create the built-in application. In order to solve this problem, an information processing apparatus disclosed in JP-A-2004-185595 has been suggested.

The information processing apparatus disclosed in JP-A-2004-185595 has an emulator which can allow an application, which is to be executed on an image forming apparatus, to be executed on a personal computer (PC). Accordingly, it is possible to develop the built-in application, without using the built-in apparatus.

Further, a built-in application created by an inexpert on programming technology causes an unexpected operation, which results in a problem in that the operation of the built-in apparatus itself cannot be continued. In order to solve this problem, a resource management system disclosed in JP-A-2004-94782 has been suggested.

The resource management system disclosed in JP-A-2004-94782 has a limitation setting unit that sets an operable range with respect to the resource utilized when software is executed by an information apparatus, and an operation range verifying unit that verifies the operation within the operable range set by the limitation setting unit. With the resource utilization request from software, the operation range verifying unit compares the set operable range and the required resource amount and, when the requested resource amount is out of the operable range, stops the execution of software.

In the information processing apparatus disclosed in JP-A-2004-185595, since the built-in application can be virtually executed on the PC, the operation of the built-in application can be verified on the PC to some extent.

However, when the built-in application is executed on the PC and when the built-in application is actually executed on the built-in apparatus, the amounts of the resource (for example, a memory) to be utilized by the built-in application in the individual execution environments do not completely match with each other. This is because the execution environments of the built-in application are different from each other. For example, in order to execute the built-in application, libraries are utilized, but the libraries have different program structures for the PC and the built-in apparatus due to the difference in the hardware configuration. For this reason, even when the same function is utilized, the libraries having the same function, but different program structures, are linked on the PC and the built-in apparatus so as to generate objects. Since these objects have different program structures, the resource amounts to be utilized do not completely match with each other. Accordingly, even with the built-in application properly operated on the PC, when the built-in application is actually incorporated into the built-in apparatus, the resource amount to be utilized is excessively increased. Accordingly, when a plurality of built-in applications are activated on the built-in apparatus, one built-in application may compete with other built-in applications, and thus the operation may become unstable. In particular, in the built-in apparatus, such as a printer, unlike the PC, the usable resource amount is very little. Therefore, in order to realize a stable operation, it is very important to manage the resource amounts to be utilized individual built-in applications in detail.

On the other hand, the resource management system disclosed in JP-A-2004-94782 is provided to prevent an unstable operation when the built-in application is executed on the built-in apparatus. In this case, it is impossible to verify the resource amount to be utilized by the built-in application before the introduction into the built-in apparatus.

Such a problem may be expected when software to be executed in a specified execution environment is developed in other execution environments, as well as when the built-in application is executed on the built-in apparatus.

An advantage of some aspects of the invention is that it provides a resource management system which is suitable for facilitating software development and for developing software with high stability through verification of a resource amount to be utilized by software in its execution environment before introduction of a resource into its execution environment, a resource conversion table generation system, a software authentication system, a resource management program, a resource conversion table generation program, a software authentication program, a resource management method, a resource conversion table generation method, and a software authentication method.

According to a first aspect of the invention, there is provided a resource management system which manages resources to be utilized by a functional module. The resource management system includes a resource measuring unit that measures a resource amount to be utilized by the functional module in a first execution environment, a resource converting unit that converts the resource amount measured by the resource measuring unit into a resource amount to be utilized by the functional module in a second execution environment, a resource limitation information acquiring unit that acquires resource limitation information indicating a resource limitation condition, and a resource limitation notifying unit that performs a notification of resource limitation on the basis of the resource amount converted by the resource converting unit and the resource limitation information acquired by the resource limitation information acquiring unit.

According to this configuration, the resource amount to be utilized by the functional module in the first execution environment is measured by the resource measuring unit, and the measured resource amount is converted into the resource amount to be utilized by the functional module in the second execution environment by the resource converting unit. Further, the resource limitation information is acquired by the resource limitation information acquiring unit. Next, the notification on resource limitation is performed by the resource limitation notifying unit on the basis of the converted resource amount and the acquired resource limitation information.

Accordingly, it is possible to verify whether or not the resource amount to be utilized by the functional module in the second execution environment meets the resource limitation condition, before introduction into the second execution environment. Therefore, as compared with the related art, software development can be easily performed, and simultaneously software can be developed with high stability.

Here, the resource is a resource which can be utilized by the functional module, and includes other resources, such as a software resource, in addition to a hardware resource. Hereinafter, the same is applied to a resource management system according to a second or fourth aspect of the invention, a resource conversion table generation system according to a thirteenth aspect of the invention, a software authentication system according to a sixteenth aspect of the invention, a resource management program according to a seventeenth, eighteenth, or twentieth aspect of the invention, a resource conversion table generation program according to a twenty-ninth aspect of the invention, a software authentication program according to a thirty-second aspect of the invention, a resource management method according to one of the thirty-third to thirty-sixth, thirty-eighth, and thirty-ninth aspects of the invention, a resource conversion table generation method according to a forty-eighth or forty-ninth aspect of the invention, and a software authentication method according to a fifty-second or fifty-third aspect of the invention.

Further, the resource amount includes, for example, a memory amount to be utilized by the functional module or the number of functional modules to be activated. Further, it also includes for example, a resource amount (a memory amount, the number of functional modules) to be assured by the application using the functional module. Hereinafter, the same is applied to a resource management system according to a second or fourth aspect of the invention, a resource conversion table generation system according to a thirteenth aspect of the invention, a software authentication system according to a sixteenth aspect of the invention, a resource management program according to a seventeenth, eighteenth, or twentieth aspect of the invention, a resource conversion table generation program according to a twenty-ninth aspect of the invention, a software authentication program according to a thirty-second aspect of the invention, a resource management method according to one of thirty-third to thirty-sixth, thirty-sixth, thirty-eighth, and thirty-ninth aspects of the invention, a resource conversion table generation method according to a forty-eighth or forty-ninth aspect of the invention, and a software authentication method according to a fifty-second or fifty-third aspect of the invention.

Further, as a resource conversion method, for example, the following methods are considered. In a first method (constant rate conversion method), a resource amount is increased or decreased at a constant rate with respect to the measured resource amount, and then a resource amount after conversion is determined. In a second method (constant amount conversion method), a constant amount is increased or decreased from the resource amount, regardless of the measured resource amount, and then a resource amount after conversion is determined. In a third method (constant number conversion method), the resource amount is substituted with a constant number, regardless of the measured resource amount, and then a resource amount after conversion is determined. In a fourth method (hybrid conversion method), one of the first to third methods is selected on the basis of a kind of a resource or the measured resource amount, and then a resource amount after conversion is determined by the selected method. The selection of the conversion method can be performed, for example, by use of threshold values A and B, as described below. When the resource amount is smaller than A (resource amount < A), the constant number conversion method is selected, when the resource amount is larger than A and smaller than B (A < resource amount < B), the constant amount conversion method is selected, and, when the resource amount is larger than B (B < resource amount), the constant rate conversion method is selected. Here, A is smaller than B (A < B).
Hereinafter, the same is applied to a resource management system according to a second or fourth aspect of the invention, a resource conversion table generation system according to a thirteenth aspect of the invention, a software authentication system according to a sixteenth aspect of the invention, a resource management program according to a seventeenth, eighteenth or twentieth aspect of the invention, a resource conversion table generation program according to a twenty-ninth aspect of the invention, a software authentication program according to a thirty-second aspect of the invention, a resource management method according to one of thirty-third to thirty-sixth, thirty-eighth, and thirty-ninth aspects of the invention, a resource conversion table generation method according to a forty-eighth or forty-ninth aspect of the invention, and a software authentication method according to a fifty-second or fifty-third aspect of the invention.

Further, as an operation for measuring the resource, for example, an operation for insuring the resource by the application to hold, and then for acquiring a resource amount to be newly assured is included. Hereinafter, the same is applied to a resource management system according to a second or fourth aspect of the invention, a resource conversion table generation system according to a thirteenth aspect of the invention, a software authentication system according to a sixteenth aspect of the invention, a resource management program according to a seventeenth, eighteenth or twentieth aspect of the invention, a resource conversion table generation program according to a twenty-ninth aspect of the invention, a software authentication program according to a thirty-second aspect of the invention, a resource management method according to one of thirty-third to thirty-sixth, thirty-eighth, and thirty-ninth aspects of the invention, a resource conversion table generation method according to a forty-eighth or forty-ninth aspect of the invention, and a software authentication method according to a fifty-second or fifty-third aspect of the invention.

Further, as the notification for resource limitation, for example, a notification indicating that the resource amount to be utilized by the functional module reaches the limitation condition or an upper limit value, a notification indicating that the resource amount to be utilized by the functional module is limited, or a notification to call attention or to encourage that the resource amount to be utilized by the functional module should be limited is included. Further, for example, a message indicating that the resource amount to be utilized by the functional module reaches an upper limit may be displayed or log information indicating that the resource amount to be utilized by the functional module reaches the upper limit may be generated. Hereinafter, the same is applied to a resource management system according to a second or fourth aspect of the invention, a resource conversion table generation system according to a thirteenth aspect of the invention, a software authentication system according to a sixteenth aspect of the invention, a resource management program according to a seventeenth, eighteenth or twentieth aspect of the invention, a resource conversion table generation program according to a twenty-ninth aspect of the invention, a software authentication program according to a thirty-second aspect of the invention, a resource management method according to one of thirty-third to thirty-sixth, thirty-eighth, and thirty-ninth aspects of the invention, a resource conversion table generation method according to a forty-eighth or forty-ninth aspect of the invention, and a software authentication method according to a fifty-second or fifty-third aspect of the invention.

Further, as the resource limitation condition, for example, an upper limit value of the resource in the second execution environment can be set. Hereinafter, the same is applied to a resource management system according to a second or fourth aspect of the invention, a resource conversion table generation system according to a thirteenth aspect of the invention, a software authentication system according to a sixteenth aspect of the invention, a resource management program according to a seventeenth, eighteenth or twentieth aspect of the invention, a resource conversion table generation program according to a twenty-ninth aspect of the invention, a software authentication program according to a thirty-second aspect of the invention, a resource management method according to one of thirty-third to thirty-sixth, thirty-eighth, and thirty-ninth aspects of the invention, a resource conversion table generation method according to a forty-eighth or forty-ninth aspect of the invention, and a software authentication method according to a fifty-second or fifty-third aspect of the invention.

Further, the resource limitation information acquiring unit may have any configuration as long as it is configured to acquire the resource limitation information. For example, the resource limitation information acquiring unit may be configured to acquire the resource limitation information input from an input device or the like, may be configured to obtain or receive the resource limitation information from an external device or the like, may be configured to read the resource limitation information from a storage device or a storage medium, or may be configured to extract the resource limitation information from the functional module or other data. Therefore, the acquisition includes at least input, obtainment, receipt, reading-out, and extraction. Hereinafter, the same is applied to a resource management system according to a second or fourth aspect of the invention.

Further, the present system may be implemented by a signal device, terminal, or other apparatus or may be implemented by a network system in which a plurality of devices, terminals, or other apparatuses are communicatably connected to one another. In the latter case, the individual constituents may belong to any apparatus from the plurality of apparatuses as long as they are communicatably connected to one another. Hereinafter, the same is applied to a resource management system according to a second or fourth aspect of the invention, a resource conversion table generation system according to a thirteenth aspect of the invention, and a software authentication system according to a sixteenth aspect of the invention.

Further, according to a second aspect of the invention, there is provided a resource management system which manages resources to be utilized by a first functional module and a plurality of second functional modules, which require the first functional module at the time of execution. The resource management system includes a resource measuring unit that measures a resource amount to be utilized by the second functional modules in a first execution environment, a resource converting unit that converts the resource amount measured by the resource measuring unit into a resource amount to be utilized by the second functional modules in a second execution environment, a resource limitation information acquiring unit that acquires resource limitation information indicating a resource limitation condition in the second execution environment, and a resource limitation notifying unit that performs a notification on resource limitation on the basis of the resource amount converted by the resource converting unit and the resource limitation information acquired by the resource limitation information acquiring unit.

According to this configuration, the resource amount to be utilized by the second functional modules in the first execution environment is measured by the resource measuring unit, and the measured resource amount is converted into the resource amount to be utilized by the second functional modules in the second execution environment by the resource converting unit. Further, the resource limitation information indicating the resource limitation condition in the second execution environment is acquired by the resource limitation information acquiring unit. Next, the notification on resource limitation- is performed by the resource limitation notifying unit on the basis of the resource amount converted by the resource converting unit and the resource limitation information acquired by the resource limitation information acquiring unit.

Accordingly, it is possible to verify whether or not the resource amount to be utilized by the second functional modules in the second execution environment meets the resource limitation condition, before introduction into the second execution environment. Therefore, as compared with the related art, software development can be easily performed, and simultaneously software can be developed with high stability.

Further, according to a third aspect of the invention, in the resource management system according to the second aspect of the invention, it is preferable that the resource measuring unit be configured to measure the resource amount to be utilized by the second functional modules in the first execution environment, and a resource amount to be utilized by the first functional module in the first execution environment for the execution of the second functional modules.

According to this configuration, the resource amount to be utilized by the second functional modules in the first execution environment and the resource amount to be utilized by the first functional module in the first execution environment for the execution of the second functional modules are measured by the resource measuring unit.

Therefore, it is possible to verity for each second functional module whether or not the resource amount to be utilized by the first functional module in the second execution environment meets the resource limitation condition.

Further, according to a fourth aspect of the invention, there is provided a resource management system which manages resources to be utilized by a first functional module and a plurality of second functional modules, which require the first functional module at the time of execution. The resource management system includes a resource measuring unit that measures a resource amount to be utilized by the first functional module in a first execution environment for the execution of the second functional modules, a resource converting unit that converts the resource amount measured by the resource measuring unit into a resource amount to be utilized by the second functional modules in a second execution environment, a resource limitation information acquiring unit that acquires resource limitation information indicating a resource limitation condition in the second execution environment, and a resource limitation notifying unit that performs a notification on resource limitation on the basis of the resource amount converted by the resource converting unit and the resource limitation information acquired by the resource limitation information acquiring unit.

According to this configuration, the resource amount to be utilized by the first functional module in the first execution environment for the execution of the second functional modules is measured by the resource measuring unit, and the measured resource amount is converted into the resource amount to be utilized by the second functional modules in the second execution environment by the resource converting unit. Further, the resource limitation information indicating the resource limitation condition in the second execution environment is acquired by the resource limitation information acquiring unit. Next, the notification on resource limitation is performed by the resource limitation notifying unit on the basis of the converted resource amount and the acquired resource limitation information.

Accordingly, it is possible to verify whether or not the resource amount to be utilized by the first functional module in the second execution environment for the execution of the second functional modules meets the resource limitation condition, before introduction into the second execution environment. Therefore, as compared with the related art, software development can be easily performed, and simultaneously software can be developed with high stability.

Further, according to a fifth aspect of the invention, the resource management system according to one of the second to the fourth aspects of the invention may further includes a resource limiting unit that prohibits the functional modules from assuring the resource on the basis of the resource amount converted by the resource converting unit and the resource limitation information acquired by the resource limitation information acquiring unit.

According to this configuration, the resource limiting unit prohibits the functional modules from assuring the resource on the basis of the converted resource amount and the acquired resource limitation information.

Therefore, it is possible to limit the functional modules to utilize the resource amount in excess of the limitation condition.

Further, according to a sixth aspect of the invention, in the resource management system according to one of the first to the fifth aspects of the invention, it is preferable that the resource converting unit performs the conversion on the basis of a resource conversion table in which conversion rates are registered, the conversion rates being determined on the basis of a resource amount to be utilized under a predetermined condition in the first execution environment and a resource amount to be utilized under the predetermined condition in the second execution environment.

According to this configuration, the conversion is performed by the resource converting means on the basis of the resource conversion table.

Therefore, it is possible to accurately convert the resource amount or the upper limit value between the first execution environment and the second execution environment.

Here, the predetermined condition includes, for example, a case in which a test program executable in any one of the first execution environment and the second execution environment is executed under the same environment (which does not means a resource, but means simultaneous execution with other programs or the like). Hereinafter, the same is applied to a resource management program according to a twenty-second aspect of the invention and a resource management method according to a forty-first aspect of the invention.

Further, the conversion rate determined on the basis of the resource amount means a rate which is calculated through a comparison between resource consumption of two execution environments obtained at the time of the execution of the test program. That is, the determination includes the calculation. Hereinafter, the same is applied to a resource management program according to a twenty-second aspect of the invention and a resource management method according to a forty-first aspect of the invention.

Further, according to a seventh aspect of the invention, in the resource management system according to the sixth aspect of the invention, it is preferable that the resource conversion table registers the conversion rates according to individual resource types, and the resource converting unit acquires the corresponding conversion rate from the resource conversion table according to the resource type to be utilized by the functional module and performs the conversion on the basis of the acquired conversion rate.

According to this configuration, by the resource converting unit, the corresponding conversion rate is acquired from the resource conversion table according to the resource type to be utilized by the functional module, and the conversion is performed on the basis of the acquired conversion rate.

Therefore, the conversion can be performed according to the resource type to be utilized by the functional module, and thus the resource amount or the upper limit between the first execution environment and the second execution environment can be accurately converted.

Here, in a case of a resource which can be defined by an occupied rate of hardware, such as a memory, a file system, for example, the resource type includes the type of hardware. Further, in a case of a software concept depending on an operating system (OS), such as a thread or a socket, the resource type includes the type of the software concept. Hereinafter, the same is applied to a resource management program according to a twenty-third aspect of the invention and a resource management method according to a forty-second aspect of the invention.

Further, the resource conversion table can have any configuration as long as the conversion rate is registered therein for each resource type. More specifically, a conversion method may be selected on the basis of the resource type, the conversion rate may be calculated for each resource type by the selected conversion method, and the calculated conversion rate may be registered. As the conversion method, for example, as described, the constant rate conversion method, the constant amount conversion method, the constant number conversion method, and the hybrid conversion method are considered. Hereinafter, the same is applied to a resource management program according to a twenty-third aspect of the invention and a resource management method according to a forty-second aspect of the invention.

Further, according to an eighth aspect of the invention, in the resource management system according to the sixth or seventh aspect of the invention, it is preferable that the resource conversion table registers the conversion rates according to individual resource utilization modes, and the resource converting unit acquires the corresponding conversion rate from the resource conversion table according to the resource utilization mode by the functional module and performs the conversion on the basis of the acquired conversion rate.

According to this configuration, by the resource converting unit, the corresponding conversion rate is acquired from the resource conversion table according to a resource utilization mode by the functional module, and the conversion is performed on the basis of the acquired conversion rate.

Therefore, the conversion can be performed according to the resource utilization mode by the functional module, and thus the resource amount or the upper limit between the first execution environment and the second execution environment can be more accurately converted.

Here, the resource utilization modes are utilized to indicate that the resource types are the same, but utilization purposes are different. Specifically, in a case of a memory, there is a case in which utilization modes are different, for example, a memory to be assured by a JAVA (Registered Trademark) interpreter and a memory to be assured by a Zip library. In this case, the conversion rates are different from each other, and thus the resources need to be separately handled. Hereinafter, the same is applied to a resource management program according to a twenty-fourth aspect of the invention and a resource management method according to a forty-third aspect of the invention.

Further, according to a ninth aspect of the invention, in the resource management system according to one of the sixth to the eighth aspects of the invention, it is preferable that, when the conversion rate is determined on the basis of resource amounts to be utilized by each of a plurality of test modules in the first execution environment and the second execution environment, the maximum from the conversion rates determined for the respective test modules is registered in the resource conversion table.

Accordingly, the maximum from the conversion rates determined for the respective test modules is registered in the resource conversion table, and thus the resource amount to be utilized by the functional module can be fully estimated.

Here, the test module means one which operates in both the first execution environment and the second execution environment and consumes the resource at the time of execution. Hereinafter, the same is applied to a resource management system according to a tenth aspect of the invention, a resource management program according to a twenty-fifth or twenty-sixth aspect of the invention, and a resource management method according to a forty-fourth or forty-fifth aspect of the invention.

Further, according to a tenth aspect of the invention, in the resource management system according to one of the sixth to the eighth aspects of the invention, it is preferable that, when the conversion rate is determined on the basis of resource amounts to be utilized by each of a plurality of test modules in the first execution environment and the second execution environment, the average of the conversion rates determined for the respective test modules is registered in the resource conversion table.

Accordingly, the average of the conversion rates determined for the respective test modules is registered in the resource conversion table. Therefore, the operation of the functional module can be assured with reliability to a certain degree, and simultaneously the resource amount to be utilized in the second execution environment can be suppressed.

Further, according to an eleventh aspect of the invention, in the resource management system according to one of the first to tenth aspects of the invention, it is preferable that the resource limitation notifying unit is configured to display a message indicating that the resource amount to be utilized by the functional module reaches an upper limit.

According to this configuration, the message indicating that the resource amount to be utilized by the functional module reaches the upper limit is displayed by the resource limitation notifying unit.

Therefore, by referring to the message, it is possible to grasp that the resource amount to be utilized by the functional module reaches the upper limit.

Here, the resource limitation notifying unit is configured to display the message. Alternatively, the notification may be performed by sound, screen flush, icon display, mail, phone, facsimile, or the like. The same is applied to a resource management program according to a twenty-seventh aspect of the invention and a resource management method according to a forty-sixth aspect of the invention.

Further, according to a twelfth aspect of the invention, in the resource management system according to one of the first to tenth aspects of the invention, it is preferable that the resource limitation notifying unit is configured to generate log information indicating that the resource amount to be utilized by the functional module reaches an upper limit.

According to this configuration, the log information indicating that the resource amount to be utilized by the functional module reaches the upper limit is generated by the resource limitation notifying unit.

Therefore, by referring to the log information, it is possible to grasp that the resource amount to be utilized by the functional module reaches the upper limit.

Further, according to a thirteenth aspect of the invention, there is provided a resource conversion table generation system which generates a resource conversion table for converting a resource amount to be utilized in a first execution environment and a resource amount to be utilized in a second execution environment. The resource conversion table generation system includes a utilization resource information acquiring unit that acquires utilization resource information indicating a resource amount to be utilized under a predetermined condition in the second execution environment, a resource measuring unit that measures a resource amount to be utilized under the predetermined condition in the first execution environment, a conversion rate calculating unit that calculates a conversion rate on the basis of the utilization resource information acquired by the utilization resource information acquiring unit and the resource amount measured by the resource measuring unit, and a resource conversion table generating unit that generates the resource conversion table on the basis of the conversion rate calculated by the conversion rate calculating unit.

According to this configuration, the utilization resource information indicating the resource amount to be utilized under the predetermined condition in the second execution environment is acquired by the utilization resource information acquiring unit. Further, the resource amount to be utilized under the predetermined condition in the first execution environment is measured by the resource measuring unit. Next, the conversion rate is calculated by the conversion rate calculating unit on the basis of the acquired utilization resource information and the measured resource amount, and the resource conversion table is generated by the resource conversion table generating unit on the basis of the calculated conversion rate.

Therefore, the resource conversion table can be easily generated.

Here, the utilization resource information acquiring unit can have any configuration as long as it is configured to acquire the utilization resource information. For example, the utilization resource information acquiring unit may be configured to receive the utilization resource information input from the input device or the like, may be configured to obtain or receive the utilization resource information from the external device or the like, may be configured to read the utilization resource information from the storage device or the storage medium, or may be configured to extract the utilization resource information from the functional module or other data. Therefore, the acquisition includes at least input, obtainment, receipt, reading-out, and extraction.

Further, according to a fourteenth aspect of the invention, in the resource conversion table generation system according to the thirteenth aspect of the invention, it is preferable that the utilization resource information is information representing a resource amount to be utilized by a test module in the second execution environment, and the resource measuring unit is configured to measure a resource amount to be utilized by the test module in the first execution environment.

According to this configuration, the utilization resource information indicating the resource amount to be utilized by the test module in the second execution environment is acquired by the utilization resource information acquiring unit. Further, the resource amount to be utilized by the same test module in the first execution environment is measured by the resource measuring unit.

Therefore, since it is enough to cause the test module to execute in the first execution environment and the second execution environment, the resource conversion table can be further easily generated.

Further, according to a fifteenth aspect of the invention, the resource conversion table generation system according to the fourteenth aspect of the invention may further include a processing time information acquiring unit that acquires processing time information indicating processing time of the test module in the second execution environment, a processing time measuring unit that measures processing time of the test module in the first execution environment, and a wait time calculating unit that calculates wait time in the first execution environment on the basis of the processing time information acquired by the processing time information acquiring unit and the processing time measured by the processing time measuring unit.

According to this configuration, the processing time information indicating the processing time of the test module in the second execution environment is acquired by the processing time information acquiring unit. Further, the processing time of the test module in the first execution environment is measured by the processing time measuring unit. Next, the wait time in the first execution environment is calculated by the wait time calculating unit on the basis of the acquired processing time information and the measured processing time.

Therefore, at the time of executing the functional module in the first execution environment, if the obtained wait time is provided during the execution, the processing time in the first execution environment and the second execution environment can be adjusted so as to be equal to each other.

Here, the processing time information acquiring unit can have any configuration as long as it is configured to acquire the processing time information. For example, the processing time information acquiring unit may be configured to receive the processing time information input from the input device or the like, may be configured to obtain or receive the processing time information from the external device or the like, may be configured to read out the processing time information from the storage device or the storage medium, or may be configured to extract the processing time information from the functional module or other data. Therefore, the acquisition includes at least input, obtainment, receipt, reading-out, and extraction.

Further, according to a sixteenth aspect of the invention, there is provided a software authentication system which performs software authentication on the basis of log information generated by the resource management system according to the twelfth aspect of the invention. The software authentication system includes a log information acquiring unit that acquires the log information, an operation verifying unit that, on the basis of the log information acquired by the log information acquiring unit, judges whether or not a resource amount to be utilized by a functional module reaches an upper limit, and a software authentication unit that, when it is judged by the operation verifying unit that the resource amount does not reach the upper limit, adds authentication information to software.

According to this configuration, the log information is acquired by the log information acquiring unit, and, on the basis of the acquired log information, it is judged by the operation verifying unit whether the resource amount to be utilized by the functional module reaches the upper limit. As the result, when it is judged that the resource amount does not reach the upper limit, the authentication information is added to software by the software authentication unit.

Therefore, the authentication information is added to only software in which the resource amount to be utilized by the functional module does not reach the upper limit, and thus the operation of software can be reliably assured.

Here, the log information acquiring unit can have any configuration as long as it is configured to acquire the log information. For example, the log information acquiring unit may be configured to receive the log information input from the input device or the like, may be configured to obtain or receive the log information from the external device or the like, may be configured to read out the log information from the storage device or the storage medium, or may be configured to extract the log information from the functional module or other data. Therefore, the acquisition includes at least input, obtainment, receipt, reading-out, and extraction.

Further, the authentication information is information which is utilized to judge execution possibility at the time of executing software in the second execution environment. From a viewpoint of security, information for the judgment of execution possibility, which cannot be copied by another person, is desirable. Further, as an information format, an arbitrary format can be adopted. Hereinafter, the same is applied to a software authentication program according to a thirty-second aspect of the invention and a software authentication method according to a fifty-second or fifty-third aspect of the invention.

Further, according to a seventeenth aspect of the invention, there is provided a resource management program which manages resources to be utilized by a functional module. The resource management program causes a computer to execute measuring a resource amount to be utilized by the functional module in a first execution environment, converting the resource amount measured in the measuring the resource amount into a resource amount to be utilized by the functional module in a second execution environment, acquiring resource limitation information indicating a resource limitation condition, and performing a notification on resource limitation on the basis of the resource amount converted in the converting of the resource amount and the resource limitation information acquired in the acquiring of the resource limitation information.

According to this configuration, if the program is read by the computer, and the computer executes the processing according to the read program, the same advantages and effects as those in the resource management system according to the first aspect of the invention are obtained.

Here, the acquiring of the resource limitation information may have any mode as long as the resource limitation information is acquired. For example, the resource limitation may be input from the input device or the like, may be obtained or received from the external device or the like, may be read out from the storage device or the storage medium, or may be extracted from the functional module or other data. Therefore, the acquisition includes at least, input, obtainment, receipt, reading-out, and extraction. Hereinafter, the same is applied to a resource management program according to an eighteenth or twentieth aspect of the invention and a resource management method according to one of thirty-third to thirty-sixth, thirty-eighth, and thirty-ninth aspects of the invention.

Further, according to an eighteenth aspect of the invention, there is provided a resource management program which manages resources to be utilized by a first functional module and a plurality of second functional modules, which require the first functional module at the time of execution. The resource management program includes a program which causes a computer to execute: measuring a resource amount to be utilized by the second functional modules in a first execution environment, converting the resource amount measured in the measuring of the resource amount into a resource amount to be utilized by the second functional modules in a second execution environment, acquiring resource limitation information indicating a resource limitation condition in the second execution environment, and performing a notification on resource limitation on the basis of the resource amount converted in the converting of the resource amount and the resource limitation information acquired in the acquiring the resource limitation information.

According to this configuration, if the program is read by the computer, and the computer executes the processing according to the read program, the same advantages and effects as those in the resource management system according to the second aspect of the invention are obtained.

Further, according to a nineteenth aspect of the invention, in the resource management program according to the eighteenth aspect of the invention, it is preferable that, in the measuring of the resource amount, the resource amount to be utilized by the second functional modules in the first execution environment, and a resource amount to be utilized by the first functional module in the first execution environment for the execution of the second functional modules is measured.

According to this configuration, if the program is read by the computer, and the computer executes the processing according to the read program, the same advantages and effects as those in the resource management system according to the third aspect of the invention are obtained.

Further, according to a twentieth aspect of the invention, there is provided a resource management program which manages resources to be utilized by a first functional module and a plurality of second functional modules, which require the first functional module at the time of execution. The resource management program includes a program which causes a computer to execute: measuring a resource amount to be utilized by the first functional module in the first execution environment for the execution of the second functional modules, converting the resource amount measured in the measuring of the resource amount into a resource amount to be utilized by the second functional modules in a second execution environment, acquiring resource limitation information indicating a resource limitation condition in the second execution environment, and performing a notification on resource limitation on the basis of the resource amount converted in the converting of the resource amount and the resource limitation information acquired in the acquiring of the resource limitation information.

According to this configuration, if the program is read by the computer, and the computer executes the processing according to the read program, the same advantages and effects as those in the resource management system according to the fourth aspect of the invention are obtained.

Further, according to a twenty-first aspect of the invention, the resource management program according to the eighteenth aspect of the invention includes a program which may further cause the computer to execute: prohibiting the functional modules from insuring the resource on the basis of the resource amount converted in the converting of the resource amount and the resource limitation information acquired in the acquiring of the resource limitation information.

According to this configuration, if the program is read by the computer, and the computer executes the processing according to the read program, the same advantages and effects as those in the resource management system according to the fifth aspect of the invention are obtained.

Further, according to a twenty-second aspect of the invention, in the resource management program according to one of the seventeenth to twenty-first aspects of the invention, it is preferable that, in the converting the resource amount, the conversion is performed on the basis of a resource conversion table in which conversion rates are registered, the conversion rates being determined on the basis of a resource amount to be utilized under a predetermined condition in the first execution environment and a resource amount to be utilized under the predetermined condition in the second execution environment.

According to this configuration, if the program is read by the computer, and the computer executes the processing according to the read program, the same advantages and effects as those in the resource management system according to the sixth aspect of the invention are obtained.

Further, according to a twenty-third aspect of the invention, in the resource management program according to the twenty-second aspect of the invention, it is preferable that the resource conversion table registers the conversion rates according to individual resource types, and, in the converting of the resource amount, the corresponding conversion rate is acquired from the resource conversion table according to the resource type to be utilized by the functional module and the conversion be performed on the basis of the acquired conversion rate.

According to this configuration, if the program is read by the computer, and the computer executes the processing according to the read program, the same advantages and effects as those in the resource management system according to the seventh aspect of the invention are obtained.

Further, according to a twenty-fourth aspect of the invention, in the resource management program according to one of the twenty-second and twenty-third aspects of the invention, it is preferable that the resource conversion table registers the conversion rates according to individual resource utilization modes, and, in the converting of the resource amount, the corresponding conversion rate is acquired from the resource conversion table according to the resource utilization mode by the functional module and the conversion is performed on the basis of the acquired conversion rate.

According to this configuration, if the program is read by the computer, and the computer executes the processing according to the read program, the same advantages and effects as those in the resource management system according to the eighth aspect of the invention are obtained.

Further, according to a twenty-fifth aspect of the invention, in the resource management program according to one of the twenty-second and twenty-third aspects of the invention, it is preferable that, when the conversion rate is determined on the basis of resource amounts to be utilized by each of a plurality of test modules in the first execution environment and the second execution environment, the maximum from the conversion rates determined for the respective test modules is registered in the resource conversion table.

According to this configuration, if the program is read by the computer, and the computer executes the processing according to the read program, the same advantages and effects as those in the resource management system according to the ninth aspect of the invention are obtained.

Further, according to a twenty-sixth aspect of the invention, in the resource management program according to one of the twenty-second to twenty-fourth aspects of the invention, it is preferable that, when the conversion rate is determined on the basis of resource amounts to be utilized by each of a plurality of test modules in the first execution environment and the second execution environment, the average of the conversion rates determined for the respective test modules is registered in the resource conversion table.

According to this configuration, if the program is read by the computer, and the computer executes the processing according to the read program, the same advantages and effects as those in the resource management system according to the tenth aspect of the invention are obtained.

Further, according to a twenty-seventh aspect of the invention, in the resource management program according to one of the seventeenth to twenty-sixth aspects of the invention, it is preferable that, in the performing of the notification, a message indicating that the resource amount to be utilized by the functional module reaches an upper limit is displayed.

According to this configuration, if the program is read by the computer, and the computer executes the processing according to the read program, the same advantages and effects as those in the resource management system according to the eleventh aspect of the invention are obtained.

Further, according to a twenty-eighth aspect of the invention, in the resource management program according to one of the seventeenth to twenty-sixth aspects of the invention, it is preferable that, in the performing of the notification, log information indicating that the resource amount to be utilized by the functional module reaches an upper limit is generated.

According to this configuration, if the program is read by the computer, and the computer executes the processing according to the read program, the same advantages and effects as those in the resource management system according to the twelfth aspect of the invention are obtained.

Further, according to a twenty-ninth aspect of the invention, there is provided a resource conversion table generation program which generates a resource conversion table for converting a resource amount to be utilized in a first execution environment into a resource amount to be utilized in a second execution environment. The resource conversion table generation program includes a program which causes a computer to execute: acquiring utilization resource information indicating a resource amount to be utilized under a predetermined condition in the second execution environment, measuring a resource amount to be utilized under the predetermined condition in the first execution environment, calculating a conversion rate on the basis of the utilization resource information acquired in the acquiring of the utilization resource information and the resource amount measured in the measuring of the resource amount, and generating the resource conversion table on the basis of the conversion rate calculated in the calculating of the conversion rate.

According to this configuration, if the program is read by the computer, and the computer executes the processing according to the read program, the same advantages and effects as those in the resource conversion table generaion system according to the thirteenth aspect of the invention are obtained.

Here, the acquiring the utilization resource information may have any mode as long as the utilization resource information is acquired. For example, the utilization resource information may be input from the input device or the like, may be obtained or received from the external device or the like, may be read out from the storage device or the storage medium, or may be extracted from the functional data or other data. Therefore, the acquisition includes at least input, obtainment, receipt, reading-out, and extraction. The same is applied to a resource conversion table generation method according to a forty-eighth and forty-ninth aspect of the invention.

Further, according to a thirtieth aspect of the invention, in the resource conversion table generation program according to the twenty-ninth aspect of the invention, it is preferable that the utilization resource information is information representing a resource amount to be utilized by a test module in the second execution environment, and, in the measuring of the resource amount, a resource amount to be utilized by the test module in the first execution environment is measured.

According to this configuration, if the program is read by the computer, and the computer executes the processing according to the read program, the same advantages and effects as those in the resource conversion table generation management system according to the fourteenth aspect of the invention are obtained.

Further, according to a thirty-first aspect of the invention, the resource conversion table generation program according to the thirtieth aspect of the invention includes a program which may further cause the computer to execute acquiring processing time information indicating processing time of the test module in the second execution environment, measuring processing time of the test module in the first execution environment, and calculating wait time in the first execution environment on the basis of the processing time information acquired in the acquiring of the processing time information and the processing of time measured in the measuring of the processing time.

According to this configuration, if the program is read by the computer, and the computer executes the processing according to the read program, the same advantages and effects as those in the resource conversion table generation system according to the fifteenth aspect of the invention are obtained.

Here, the acquiring of the processing time information can have any mode as long as the processing time information is acquired. For example, the processing time information may be input from the input device or the like, may be obtained or received from the external device or the like, may be read out from the storage device or the storage medium, or may be extracted from the functional module or other data. Therefore, the acquisition includes at least input, obtainment, receipt, reading-out, and extraction. Hereinafter, the same is applied to a resource conversion table generation method according to a fifty-first aspect of the invention.

Further, according to a thirty-second aspect of the invention, there is provided a software authentication program which performs software authentication on the basis of log information generated by the resource management system according to the twelfth aspect of the invention. The software authentication program includes a program which causes a computer to execute: acquiring the log information, verifying an operation by judging, on the basis of the log information acquired in the acquiring of the log information, whether or not a resource amount to be utilized by a functional module reaches an upper limit, and, when it is judged in the verificating of the operation that the resource amount does not reach the upper limit, authentificating software by adding authentication information to the software.

According to this configuration, if the program is read by the computer, and the computer executes the processing according to the read program, the same advantages and effects as those in the software authentification program according to the sixteenth aspect of the invention are obtained.

Here, the acquiring of the log information can have any mode as long as the log information is acquired. For example, the log information may be input from the input device or the like, may be obtained or received from the external device or the like, may be read out from the storage device or the storage medium, or may be extracted from the functional module or other data. Therefore, the acquisition includes at least input, obtainment, receipt, reading-out, and extraction. Hereinafter, the same is applied to a software authentication method according to a fifty-second or fifty-third aspect of the invention.

Further, according to a thirty-third aspect of the invention, there is provided a resource management method which manages resources to be utilized by a functional module. The resource management method includes measuring a resource amount to be utilized by the functional module in a first execution environment, converting the resource amount measured in the measuring the resource amount into a resource amount to be utilized by the functional module in a second execution environment, acquiring resource limitation information indicating a resource limitation condition, and performing a notification on resource limitation on the basis of the resource amount converted in the converting of the resource amount and the resource limitation information acquired in the acquiring of the resource limitation information.

Accordingly, the same effects as those in the resource management system according to the first aspect of the invention are obtained.

Further, according to a thirty-fourth aspect of the invention, there is provided a resource management method which manages resources to be utilized by a functional module. The resource management method includes, by use of an arithmetic unit, measuring a resource amount to be utilized by the functional module in a first execution environment by an arithmetic unit, converting the resource amount measured in the measuring of the resource amount into a resource amount to be utilized by the functional module in a second execution environment, acquiring resource limitation information indicating a resource limitation condition, and performing a notification on resource limitation on the basis of the resource amount converted in the converting of the resource amount and the resource limitation information acquired in the acquiring of the resource limitation information.

Accordingly, the same effects as those in the resource management system according to the first aspect of the invention are obtained.

Further according to a thirty-fifth aspect of the invention, there is provided a resource management method which manages resources to be utilized by a first functional module and a plurality of second functional modules, which require the first functional module at the time of execution. The resource management method includes measuring a resource amount to be utilized by the second functional modules in a first execution environment, converting the resource amount measured in the measuring of the resource amount into a resource amount to be utilized by the second functional modules in a second execution environment, acquiring resource limitation information indicating a resource limitation condition in the second execution environment, and performing a notification on resource limitation on the basis of the resource amount converted in the converting of the resource amount and the resource limitation information acquired in the acquiring of the resource limitation information.

Accordingly, the same effects as those in the resource management system according to the second aspect of the invention are obtained.

Further according to a thirty-sixth aspect of the invention, there is provided a resource management method which manages resources to be utilized by a first functional module and a plurality of second functional modules, which require the first functional module at the time of execution. The resource management method includes, by use of an arithmetic unit, measuring a resource amount to be utilized by the second functional modules in a first execution environment, converting the resource amount measured in the measuring the resource amount into a resource amount to be utilized by the second functional modules in a second execution environment, acquiring resource limitation information indicating a resource limitation condition in the second execution environment, and performing a notification on resource limitation on the basis of the resource amount converted in the converting of the resource amount and the resource limitation information acquired in the acquiring of the resource limitation information.

Accordingly, the same effects as those in the resource management system according to the second aspect of the invention are obtained.

Further, according to a thirty-seventh aspect of the invention, in the resource management method according to the thirty-fifth or thirty-sixth aspect of the invention, it is preferable that, in the measuring of the resource amount, the resource amount to be utilized by the second functional modules in the first execution environment, and a resource amount to be utilized by the first functional module in the first execution environment for the execution of the second functional modules is measured.

Accordingly, the same effects as those in the resource management system according to the third aspect of the invention are obtained.

Further, according to a thirty-eighth aspect of the invention, there is provided a resource management method which manages resources to be utilized by a first functional module and a plurality of second functional modules, which require the first functional module at the time of execution. The resource management method includes measuring a resource amount to be utilized by the first functional module in the first execution environment for the execution of the second functional modules, converting the resource amount measured in the measuring the resource amount into a resource amount to be utilized by the second functional modules in a second execution environment, acquiring resource limitation information indicating a resource limitation condition in the second execution environment, and performing a notification on resource limitation on the basis of the resource amount converted in the converting of the resource amount and the resource limitation information acquired in the acquiring of the resource limitation information.

Accordingly, the same effects as those in the resource management system according to the fourth aspect of the invention are obtained.

Further, according to a thirty-ninth aspect of the invention, there is provided a resource management method which manages resources to be utilized by a first functional module and a plurality of second functional modules, which require the first functional module at the time of execution. The resource management method includes, by use of an arithmetic unit, measuring a resource amount to be utilized by the first functional module in the first execution environment for the execution of the second functional modules, converting the resource amount measured in the measuring of the resource amount into a resource amount to be utilized by the second functional modules in a second execution environment, acquiring resource limitation information indicating a resource limitation condition in the second execution environment, and performing a notification on resource limitation on the basis of the resource amount converted in the converting of the resource amount and the resource limitation information acquired in the acquiring of the resource limitation information.

Accordingly, the same effects as those in the resource management system according to the fourth aspect of the invention are obtained.

Further, according to a fortieth aspect of the invention, the resource management method according to the eighteenth aspect of the invention may further include prohibiting the functional modules from assuring the resource on the basis of the resource amount converted in the converting of the resource amount and the resource limitation information acquired in the acquiring of the resource limitation information.

Accordingly, the same effects as those in the resource management system according to the fifth aspect of the invention are obtained.

Further, according to a forty-first aspect of the invention, in the resource management method according to one of the thirty-third to fortieth aspects of the invention, it is preferable that, in the converting of the resource amount, the conversion is performed on the basis of a resource conversion table in which conversion rates are registered, the conversion rates being determined on the basis of a resource amount to be utilized under a predetermined condition in the first execution environment and a resource amount to be utilized under the predetermined condition in the second execution environment.

Accordingly, the same effects as those in the resource management system according to the sixth aspect of the invention are obtained.

Further, according to a forty-second aspect of the invention, in the resource management method according to the forty-first aspect of the invention, it is preferable that the resource conversion table registers the conversion rates according to individual resource types, and, in the converting of the resource amount, the corresponding conversion rate is acquired from the resource conversion table according to the resource type to be utilized by the functional module and the conversion is performed on the basis of the acquired conversion rate.

Accordingly, the same effects as those in the resource management system according to the seventh aspect of the invention are obtained.

Further, according to a forty-third aspect of the invention, in the resource management method according to the forty-first or forty-second aspect of the invention, it is preferable that the resource conversion table registers the conversion rates according to individual resource utilization modes, and, in the converting of the resource amount, the corresponding conversion rate is acquired from the resource conversion table according to the resource utilization mode by the functional module and the conversion is performed on the basis of the acquired conversion rate.

Accordingly, the same effects as those in the resource management system according to the eighth aspect of the invention are obtained.

Further, according to a forty-fourth aspect of the invention, in the resource management method according to one of the forty-first to forty-third aspects of the invention, it is preferable that, when the conversion rate is determined on the basis of resource amounts to be utilized by each of a plurality of test modules in the first execution environment and the second execution environment, the maximum from the conversion rates determined for the respective test modules is registered in the resource conversion table.

Accordingly, the same effects as those in the resource management system according to the ninth aspect of the invention are obtained.

Further, according to a forty-fifth aspect of the invention, in the resource management program according to one of the forty-first to forty-third aspects of the invention, it is preferable that, when the conversion rate is determined on the basis of resource amounts to be utilized by each of a plurality of test modules in the first execution environment and the second execution environment, the average of the conversion rates determined for the respective test modules is registered in the resource conversion table.

Accordingly, the same effects as those in the resource management system according to the tenth aspect of the invention are obtained.

Further, according to a forty-sixth aspect of the invention, in the resource management method according to one of the thirty-third to forty-fifth aspects of the invention, it is preferable that, in the performing the notification, a message indicating that the resource amount to be utilized by the functional module reaches an upper limit is displayed.

Accordingly, the same effects as those in the resource management system according to the eleventh aspect of the invention are obtained.

Further, according to a forty-seventh aspect of the invention, in the resource management method according to one of the thirty-third to forty-fifth aspects of the invention, it is preferable that, in the performing the notification, log information indicating that the resource amount to be utilized by the functional module reaches an upper limit is generated.

Accordingly, the same effects as those in the resource management system according to the twelfth aspect of the invention are obtained.

Further, according to a forty-eighth aspect of the invention, there is provided a resource conversion table generation method which generates a resource conversion table for converting a resource amount to be utilized in a first execution environment into a resource amount to be utilized in a second execution environment. The resource conversion table generation method includes acquiring utilization resource information indicating a resource amount to be utilized under a predetermined condition in the second execution environment, measuring a resource amount to be utilized under the predetermined condition in the first execution environment, calculating a conversion rate on the basis of the utilization resource information acquired in the acquiring the utilization resource information and the resource amount measured in the measuring of the resource amount, and generating the resource conversion table on the basis of the conversion rate calculated in the calculating of the conversion rate.

Accordingly, the same effects as those in the resource conversion table generation system according to the thirteenth aspect of the invention are obtained.

Further, according to a forty-ninth aspect of the invention, there is provided a resource conversion table generation method which generates a resource conversion table for converting a resource amount to be utilized in a first execution environment into a resource amount to be utilized in a second execution environment. The resource conversion table generation method includes, by use of an arithmetic unit, acquiring utilization resource information indicating a resource amount to be utilized under a predetermined condition in the second execution environment, measuring a resource amount to be utilized under the predetermined condition in the first execution environment, calculating a conversion rate on the basis of the utilization resource information acquired in the acquiring of the utilization resource information and the resource amount measured in the measuring of the resource amount, and generating the resource conversion table on the basis of the conversion rate calculated in the calculating of the conversion rate.

Accordingly, the same effects as those in the resource conversion table generation system according to the thirteenth aspect of the invention are obtained.

Further, according to a fiftieth aspect of the invention, in the resource conversion table generation method according to the forty-eighth or forty-ninth aspect of the invention, it is preferable that the utilization resource information is information representing a resource amount to be utilized by a test module in the second execution environment, and, in the measuring of the resource amount, a resource amount to be utilized by the test module in the first execution environment is measured.

Accordingly, the same effects as those in the resource conversion table generation system according to the fourteenth aspect of the invention are obtained.

Further, according to a fifty-first aspect of the invention, the resource conversion table generation method according to the fiftieth aspect of the invention may further include acquiring processing time information indicating processing time of the test module in the second execution environment, measuring processing time of the test module in the first execution environment, and calculating wait time in the first execution environment on the basis of the processing time information acquired in the acquiring of the processing time information and the processing time measured in the measuring of the processing time.

Accordingly, the same effects as those in the resource conversion table generation system according to the fifteenth aspect of the invention are obtained.

Further, according to a fifty-second aspect of the invention, there is provided a software authentication method which performs software authentication on the basis of log information generated by the resource management system according to the twelfth aspect of the invention. The software authentication method includes acquiring the log information, verifying an operation by judging, on the basis of the log information acquired in the acquiring of the log information, whether or not a resource amount to be utilized by a functional module reaches an upper limit, and, when it is judged in the verifying of the operation that the resource amount does not reach the upper limit, authenticating software by adding authentication information to the software.

Accordingly, the same effects as those in the software authentification system according to the sixteenth aspect of the invention are obtained.

Further, according to a fifty-third aspect of the invention, there is provided a software authentication method which performs software authentication on the basis of log information generated by the resource management system according to the twelfth aspect of the invention. The software authentication method includes, by use of an arithmetic unit, acquiring the log information, verifying an operation by judging, on the basis of the log information acquired in the acquiring of the log information, whether or not a resource amount to be utilized by a functional module reaches an upper limit, and, when it is judged in the verifying of the operation that the resource amount does not reach the upper limit, authentificating software by adding authentication information to the software.

Accordingly, the same effects as those in the software authentification system according to the sixteenth aspect of the invention are obtained.

Embodiments of the invention will now be described by way of further example only and with reference to the accompanying drawings wherein like numbers reference like elements; in which:-

Fig. 1 is a diagram showing a configuration of JAVA (Registered Trademark) software.

Fig. 2 is a functional block diagram showing a functional outline of a host terminal 100.

Fig. 3 is a block diagram showing a hardware configuration of the host terminal 100.

Fig. 4 is a diagram showing a data structure of resource limitation information 400.

Fig. 5 is a diagram showing a data structure of module information 420.

Fig. 6 is a diagram showing a data structure of an execution environment information registration table 440.

Fig. 7 is a diagram showing a data structure of a resource conversion table 22.

Fig. 8 is a diagram showing a data structure of a resource management table 460.

Fig. 9 is a diagram showing a data structure of an event listener table 480.

Fig. 10 is a flowchart showing an individual functional module control processing.

Fig. 11 is a flowchart showing an execution possibility judgment processing.

Fig. 12 is a flowchart showing a module activation processing.

Fig. 13 is a flowchart showing an event listener registration processing.

Fig. 14 is a flowchart showing a class read processing.

Fig. 15 is a flowchart showing an event listener control processing.

Fig. 16 is a flowchart showing an event listener execution processing.

Fig. 17 is a flowchart showing an instance deletion processing.

Fig. 18 is a diagram showing the contents of a log file when an error occurs.

Fig. 19 is a diagram showing the contents of a log file when an error does not occur.

Fig. 20 is a time chart when individual functional modules b and c, which are subjects of resource management, are executed in parallel.

Fig. 21 is a functional block diagram showing a functional outline of a host terminal 100.

Fig. 22 is a diagram showing a data structure of a resource conversion table 22.

Fig. 23 is a diagram showing a data structure of a resource management table 460.

Fig. 24 is a flowchart showing an execution possibility judgment processing.

Fig. 25 is a diagram showing a data structure of an execution result registration table 520.

Fig. 26 is a flowchart showing a utilized resource amount measurement processing.

Fig. 27 is a flowchart showing a resource conversion table generation processing.

Fig. 28 is a table showing execution results when three test modules T1 to T3 are executed by a network printer.

Fig. 29 is a table showing execution results when wait time is set to 'zero', and when three test modules T1 to T3 are executed by the host terminal 100.

Fig. 30 is a table showing execution results when wait time is set to -'ten', and when three test modules T1 to T3 are executed by the host terminal 100.

Fig. 31 is a flowchart showing a module authentication processing.

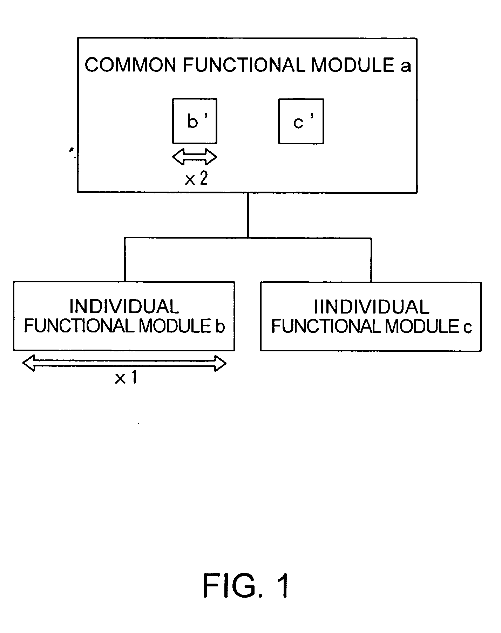

Hereinafter, a first embodiment of the invention will be described with reference to the drawings. Figs. 1 to 20 are diagrams showing a resource management system, a resource management program, and a resource management method according to the first embodiment of the invention.

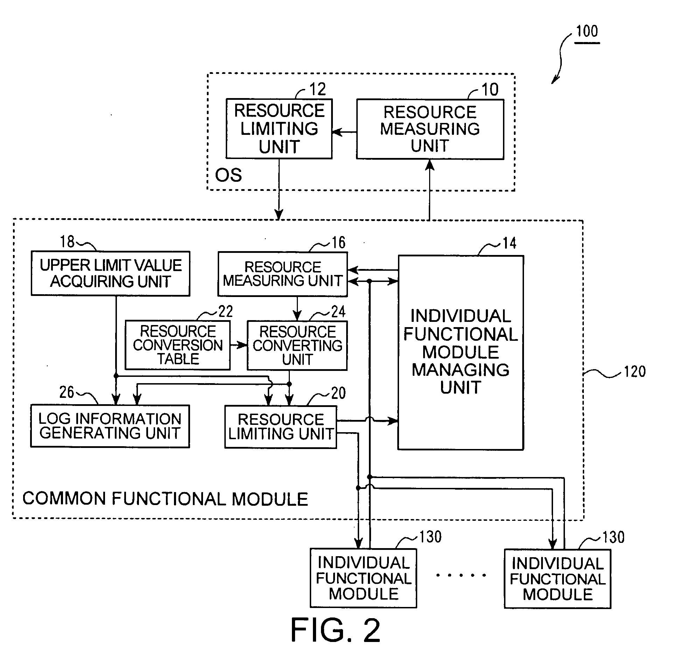

In the present embodiment, as shown in Fig. 2, the resource management system, the resource management program, and the resource management method according to the invention are applied to a case in which a JAVA (Registered Trademark) class set is emulated in order to control the operation of a network printer in an execution environment of a JAVA (Registered Trademark) application on a host terminal 100.

First, the functional outline of the host terminal 100, to which the invention is applied, will be described.

Fig. 1 is a diagram showing the configuration of JAVA (Registered Trademark) software.

In the execution environment of the JAVA (Registered Trademark) application, a common functional module having JAVA (Registered Trademark) classes for controlling the execution of the JAVA (Registered Trademark) class set and JVM (JAVA (Registered Trademark) Virtual Machine) is run on the OS, and an individual functional module serving as the JAVA (Registered Trademark) class set are run on the common functional module. Here, JAVA (Registered Trademark) software has the common functional module and the individual functional module.

As shown in Fig. 1, the common functional module is configured to execute a plurality of individual functional modules. Fig. 1 exemplarily shows an example in which two individual functional modules b and c are run on the common functional module a. Here, when a resource amount to be utilized by the individual functional module b is x1, a resource amount to be utilized by the common functional module a for the execution of the individual functional module b is x2, and an upper limit value of a resource to be utilized by the individual functional module b is Xₘₐₓ, in the present embodiment, the resource amount is limited such that the condition x1 + x2 ≤ Xₘₐₓ is satisfied.

Fig. 2 is a functional block diagram showing the functional outline of the host terminal 100.

As shown in Fig. 2, the host terminal 100 has an OS 110, a common functional module 120, and a plurality of individual functional modules 130.

The OS 110 has a resource measuring unit 10 that measures a resource amount to be utilized by JAVA (Registered Trademark) software and a resource limiting unit 12 that limits the resource amount to be utilized by entire JAVA (Registered Trademark) software.

The resource limiting unit 12 limits the resource to be utilized by JAVA (Registered Trademark) software such that the resource amount measured by the resource measuring unit 10 is less than a predetermined upper limit value allocated to JAVA (Registered Trademark) software.

The common functional module 120 has an individual functional module managing unit 14 that manages the execution of the individual functional module 130, a resource measuring unit 16 that measures resource amounts to be utilized by the individual functional module managing unit 14 and the individual functional module 130, a resource conversion table 22, in which a conversion rate determined on the basis of a resource amount to be utilized by the host terminal 100 under a predetermined condition and a resource amount to be utilized by the network printer under the same predetermined condition are registered, and a resource converting unit 24 that converts a resource amount.

For the individual functional module 130, the resource measuring unit 16 measures the resource amount to be utilized by the individual functional module 130 and the resource amount to be utilized by the individual functional module managing unit 14 for the execution of the individual functional module 130.

The resource converting unit 24 converts the resource amount measured by the resource measuring unit 16 into the resource amount to be utilized by the network printer on the basis of the resource conversion table 22.

The common functional module 120 further has an upper limit value acquiring unit 18 that acquires the upper limit value of the resource to be utilized by the individual functional module 130 in the network printer, a resource limiting unit 20 that limits the resource amounts to be utilized by the individual functional module managing unit 14 and the individual functional module 130, and a log information generating unit 26 that generates log information.

The resource limiting unit 20 limits the resource amount to be utilized by the individual functional module 130 and the resource amount to be utilized by the individual functional module managing unit 14 for the execution of the individual functional module 130 such that the resource amount converted by the resource converting unit 24 is less than the upper limit value acquired by the upper limit value acquiring unit 18.

When it is judged that the resource amount converted by the resource converting unit 24 is equal to or more than the upper limit value acquired by the upper limit value acquiring unit 18, the log information acquiring unit 26 generates the log information indicating that the resource amount to be utilized by the individual functional module 130 reaches the upper limit.

Next, the configuration of the host terminal 100 will be described in detail.

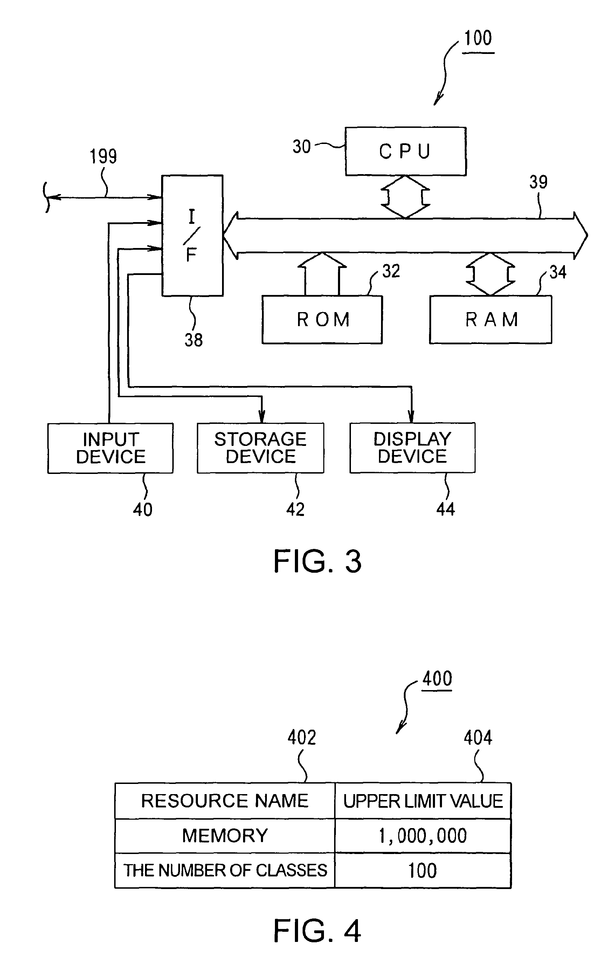

Fig. 3 is a block diagram showing the hardware configuration of the host terminal 100.

As shown in Fig. 3, the host terminal 100 has a CPU 30 that controls arithmetic operations and an entire system on the basis of a control program, a ROM 32 that stores the control program of the CPU 30 or the like in a predetermined area in advance, a RAM 34 that stores data read out from the ROM 32 or the like, or arithmetic results required for the arithmetic process of the CPU 30, and an I/F 38 that mediates input/output of data to/from an external device. All of these are communicatably connected to one another via a bus 39, which is a signal line for transmitting data.

To the I/F 38, an input device 40, such as a keyboard or a mouse, which is used as a human interface to input data, a storage device 42 that stores data or tables as files, a display device 44 that displays a screen on the basis of image signals, and a signal line for the connection to a network 199 are connected.

Next, the data structure of the storage device 42 will be described.

The storage device 42 stores the common functional module 120 and the plurality of individual functional modules 130.

The individual functional modules 130 are configured to include resource limitation information, in which the upper limit value of the resource in the network printer is stored.

Fig. 4 is a diagram showing the data structure of the resource limitation information 400.

As shown in Fig. 4, the resource limitation information 400 is configured to include a field 402 that stores the upper limit value of a memory (RAM 34) to be utilized by the individual functional module 130 and the common functional module 120 for the execution of the individual functional module 130, and a field 404 that stores the number of classes to be activated in the individual functional module 130 and the common functional module 120 for the execution of the individual functional module 130.

The individual functional module 130 is configured to further include module information on the individual functional module 130.

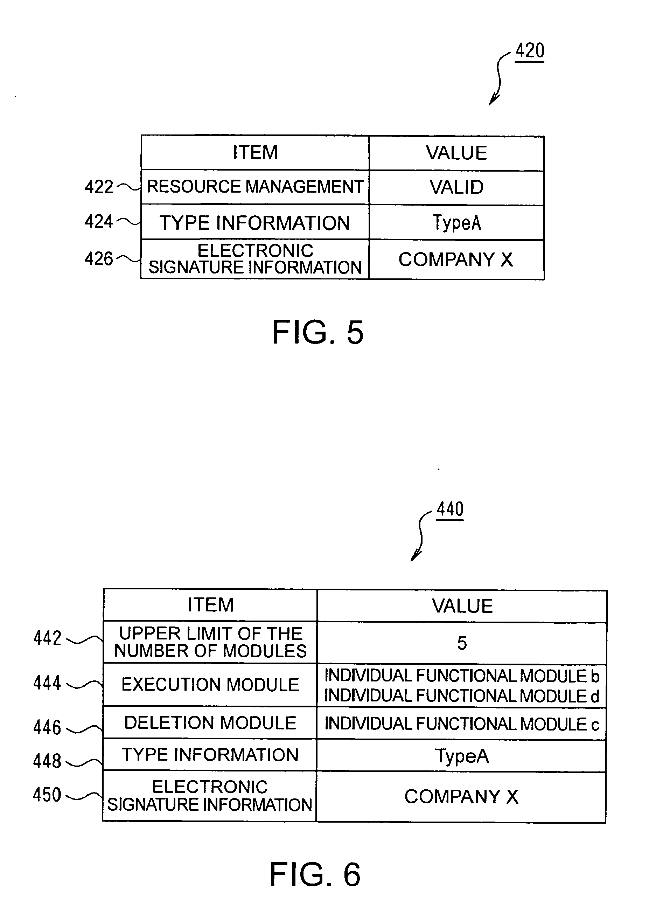

Fig. 5 is a diagram showing the data structure of the module information 420.

As shown in Fig. 5, the module information 420 is configured to include a field 422 that stores information on whether or not the resource amount to be utilized by the individual functional module 130 is limited (hereinafter, referred to as subject of resource management), a field 424 that stores the type of a network printer to be executed by the individual functional module 130, and a field 426 that stores electronic signature information.

In the example of Fig. 5, in the field 422, 'VALID' is stored. This represents that the individual functional module 130 is managed as the subject of resource management. Further, in the fields 424 and 426, 'TypeA' and 'COMPANY X' are stored, respectively. This represents that the type to be executed by the individual functional module 130 is 'TypeA' and an electronic signature of the company X is written.

The storage device 42 also stores an execution environment information registration table, in which execution environment information indicating an execution environment of the common functional module 120 is registered.

Fig. 6 is a diagram showing the data structure of the execution environment information registration table 440.

As shown in Fig. 6, the execution environment information registration table 440 is configured to include a field 442 in which an upper limit value of the number of individual functional modules 130 to be activated is registered, a field 444 in which the name of the individual functional module 130 to be executed is registered, a field 446 in which the name of the individual functional module 130 to be deleted is registered, a field 448 in which the type of the network printer to be emulated is registered, and a field 450 in which compliable electronic signature information is registered.

In the example of Fig. 6, in the fields 442, 444, and 446, '5', 'INDIVIDUAL FUNCTIONAL MODULES b, d', and 'INDIVIDUAL FUNCTIONAL MODULE c' are registered, respectively. This represents that five individual functional modules 130 can be activated to the maximum, the individual functional modules b and d are at executed at the time of the activation of the common functional module 120, and the individual functional module c is to be deleted. Further, in the fields 448 and 450, 'TypeA' and 'COMPANY X' are registered, respectively. This represents that the type of the network printer to be emulated is 'TypeA' and the individual functional module 130 including electronic signature information of the company X can be executed.

The storage device 42 also stores the resource conversion table 22.

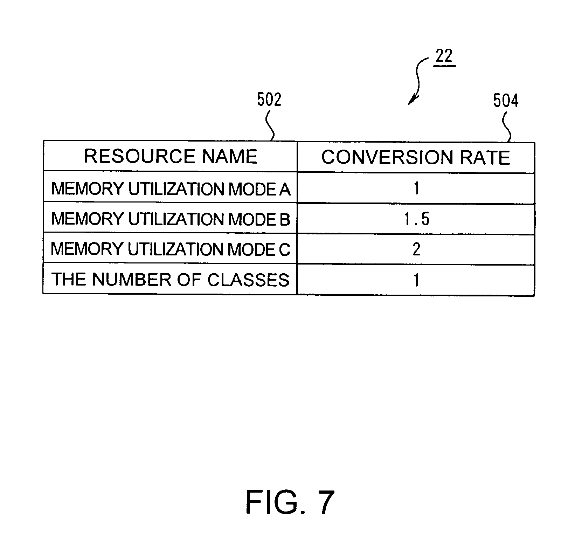

Fig. 7 is a diagram showing the data structure of the resource conversion table 22.

As shown in Fig. 7, in the resource conversion table 22, one record is registered for each resource type or each utilization mode. Each record is configured to include a field 502 that registers a resource name and a field 504 that registers the conversion rate.

In the example of Fig. 7, in the first record, 'MEMORY UTILIZATION MODE A' as the resource name and '1' as the conversion rate are registered. This represents that, when the individual functional module 130 utilizes the memory in the utilization mode A, the conversion into the memory amount to be utilized in the network printer is performed through the multiplication of the conversion rate '1' to the memory amount to be utilized by the individual functional module 130 in the host terminal 100. Similarly, when the individual functional module 130 utilizes the memory in the utilization mode B or C, the conversion rate corresponding to the utilization mode B or C is adopted.

The memory utilization modes A to C are determined by functions or libraries to be utilized by the common functional module 120 and the individual functional module 130. For example, when a library having integer parameters or the like is utilized, the utilization mode A is adopted, and, when a library having double parameters or the like is utilized, the utilization mode B is adopted.

Further, in the fourth record, 'THE NUMBER OF CLASSES' as the resource name and '1' as the conversion rate are registered. This represents that the conversion into the number of classes activated in the network printer is performed through the multiplication of the conversion rate '1' to the number of classes activated by the individual functional module 130 in the host terminal 100.

Moreover, when the conversion rate is determined on the basis of the resource amount to be utilized by each of a plurality of test modules in the host terminal 100 and the network printer, in the resource conversion table 22, the maximum from the conversion rates determined for the respective test modules is registered. The generation of the resource conversion table 22 will be described in detail by way of an embodiment described below.

The storage device 42 also stores, for the individual functional module 130, which is the subject of resource management, a resource management table that manages the resource amount to be utilized by the individual functional module 130. The resource management table is generated at the time of the activation of the individual functional module 130, which is the subject of resource management.

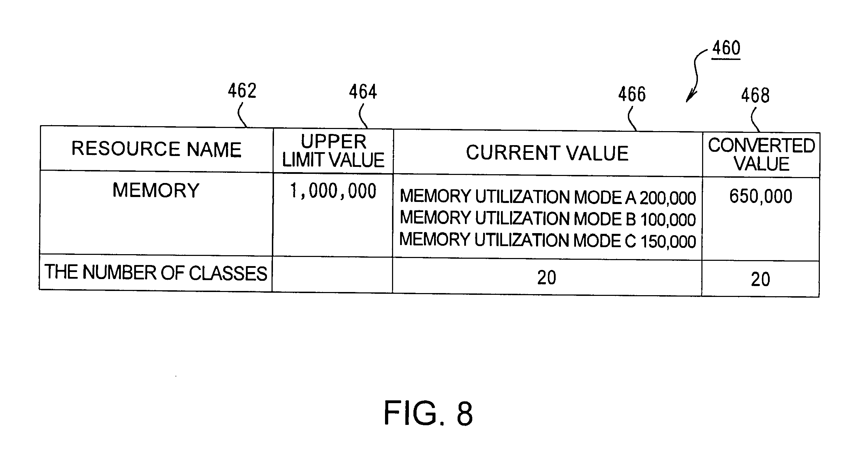

Fig. 8 is a diagram showing the data structure of the resource management table 460.

As shown in Fig. 8, in the resource management table 460, one record is registered for each resource type. Each record is configured to include a field 462 that registers the resource name, a field 464 that registers the upper limit value of the resource to be utilized by the individual functional module 130 in the network printer, a field 466 that registers the resource amount currently utilized by the individual functional module 130 in the host terminal 100, and a field 468 that registers a value obtained by converting the value of the field 466 into the resource amount to be utilized in the network printer.

In the example of Fig. 8, in the first record, 'MEMORY' as the resource name, '1000000' as the upper limit value, '200000', '100000' and '150000' as the current values for the utilization modes A to C, and '650000' as the converted value are registered. This represents that the upper limit value of the memory amount to be utilized by the individual functional module 130 in the network printer is 1000000 [byte], and the memory amounts to be currently utilized in the utilization modes A, B, C are 200000 [byte], 100000 [byte], and 150000 [byte], respectively. Further, it is shown that the value converted into the memory amount to be utilized in the network printer (hereinafter, referred to as converted memory amount) is 650000 [byte]. The converted memory amount can be calculated through the calculation 2000000 x 1 + 100000 x 1.5 + 150000 x 2 = 650000 with reference to the resource conversion table 22 of Fig. 7.

Further, in the second record, 'THE NUMBER OF CLASSES 1 as the resource name, '100' as the upper limit value, '20' as the current value, and '20' as the converted value are registered. This represents that the upper limit value of the number of classes to be activated by the individual functional module 130 in the network printer is 100, and the number of currently active classes is 20. In addition, it is shown that the value converted into the number of classes activated in the network printer (hereinafter, referred to as the converted number of classes) is 20. The converted number of classes can be calculated through the calculation 20 x 1 = 20 with reference to the resource conversion table 22 of Fig. 7.

The storage device 42 also stores an event listener table 480 that registers event listeners for processing events to be received by the individual functional module 130.

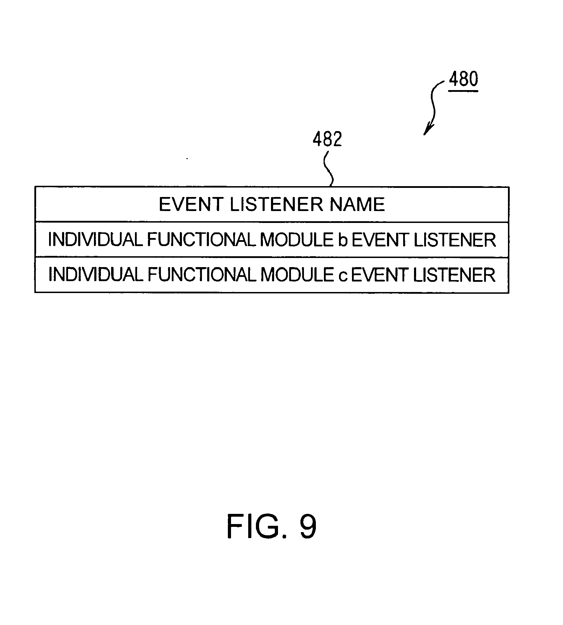

Fig. 9 is a diagram showing the data structure of the event listener table 480.

As shown in Fig. 9, in the event listener table 480, a record is registered for each event listener to be registered by the individual functional module 130. Each record is configured to include a field 482 that registers an event listener name.

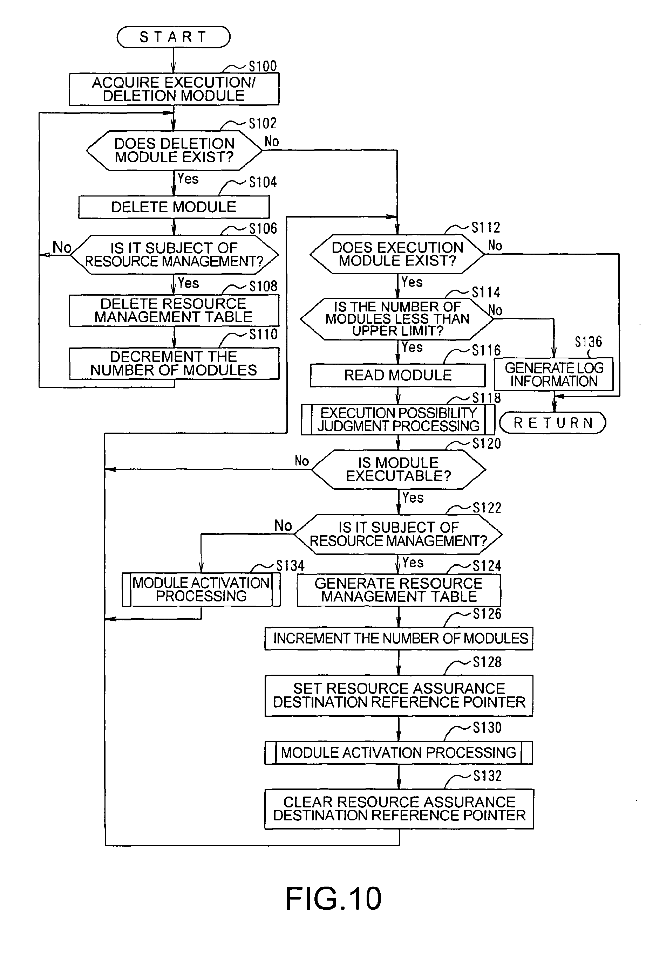

Returning to Fig. 3, the CPU 30 has a micro processing unit or the like, activates a predetermined program stored in a predetermined area of the ROM 32, and executes an individual functional module control processing, a class read processing, an event listener control processing, and an instance deletion processing shown in flowcharts of Figs. 10, 14, 15, and 17, respectively, as processings of the common functional module 120 according to the program in a time division manner.

First, the individual functional module control processing will be described in detail with reference to Fig. 10.

Fig. 10 is a flowchart showing the individual functional module control processing.

The individual functional module control processing is a processing for control deletion and execution of the individual functional module 130. If the individual functional module control processing is executed in the CPU 30, as shown in Fig. 10, the process progresses to the step S100.

At the step S100, the name of the individual functional module 130 to be executed and the name of the individual functional module 130 to be deleted are acquired from the execution environment information registration table 440, and then the process progresses to the step S102. At the step S102, it is judged whether or not the individual functional module 130 to be deleted exists and, when it is judged that the individual functional module 130 to be deleted exists (Yes), the process progresses to the step S104.

At the step S104, on the basis of the acquired name, the corresponding individual functional module 130 is deleted from the storage device 42, and then the process progresses to the step S106. At the step S106, on the basis of the module information 420 included in the corresponding individual functional module 130, it is judged whether or not the corresponding individual functional module 130 is the subject of resource management and, when it is judged that the corresponding individual functional module 130 is the subject of resource management (Yes), the process progresses to the step S108.

At the step S108, the resource management table 460 corresponding to the corresponding individual functional module 130 is deleted from the storage device 42, and then process progresses to the step S110. At the step S110, the parameter value indicating the number of currently active modules decrements by '1', and the process progresses to the step S102.

On the other hand, at the step S106, when it is judged that the corresponding individual functional module 130 is not the subject of resource management (No), the process progresses to the step S102.

At the step S102, when it is judged that the individual functional module 130 to be deleted does not exist (No), the process progresses to the step S112. At the step S112, it is judged whether or not the individual functional module 130 to be executed exists and, when it is judged that the individual functional module 130 to be executed exist (Yes), the process progresses to the step S114.

At the step S114, it is judged whether or not the parameter value indicating the number of currently active modules is less than a predetermined upper limit value and, when it is judged that the parameter value is less than the predetermined upper limit value (Yes), the process progresses to the step S116.

At the step S116, on the basis of the acquired name, the corresponding individual functional module 130 is read from the storage device 42, and then the process progresses to the step S118. At the step S118, an execution possibility judgment processing for judging execution possibility of the read individual functional module 130 is executed, and then the process progresses to the step S120.

At the step S120, it is judged whether or not a return value indicating execution permission of the individual functional module 130 is returned from the execution possibility judgment processing and, when it is judged that the return value indicating the execution permission is returned (Yes), the process progresses to the step S122.

At the step S122, on the basis of the module information 420 included in the corresponding individual functional module 130, it is judged whether or not the corresponding individual functional module 130 is the subject of resource management and, when it is judged that the corresponding individual functional module 130 is the subject of resource management (Yes), the process progresses to the step S124.

At the step S124, the resource management table 460 corresponding to the corresponding individual functional module 130, the upper limit value is acquired from the resource limitation information 400 included in the corresponding individual functional module 130, the acquired upper limit value is registered in the generated resource management table 460, and then the process progresses to the step S126. At the step S126, the parameter value indicating the number of currently active modules increments by '1', and the process progresses to the step S128.

At the step S128, an address of the generated resource management table 460 is set to a resource assurance destination reference pointer, and then the process progresses to the step S130. At the step S130, a module activation processing for activating the corresponding individual functional module 130 is executed, and then the process progresses to the step S132. At the step S132, the resource assurance destination reference pointer is cleared, and then the process progresses to the step S112.

On the other hand, at the step S122, when it is judged that the corresponding individual functional module 130 is not the subject of resource management (No), the process progresses to the step S134. At the step S134, like the step S130, the module activation processing is executed, and then the process progresses to the step S112.

Further, at the step S120, when it is judged that a return value indicating execution prohibition of the individual functional module 130 is returned from the execution possibility judgment processing (No), the process progresses to the step S112.

In addition, at the step S114, when it is judged that the parameter value indicating the number of modules currently active is equal to or more than the predetermined upper limit value (No), the process progresses to the step S136. At the step S136, the log information indicating that the number of modules reaches the upper limit is generated. Next, a series of steps end, and the process returns to an original state.

At the step S112, when it is judged that the individual functional module 130 to be executed does not exist (No), a series of steps end, and the process returns to an original state.

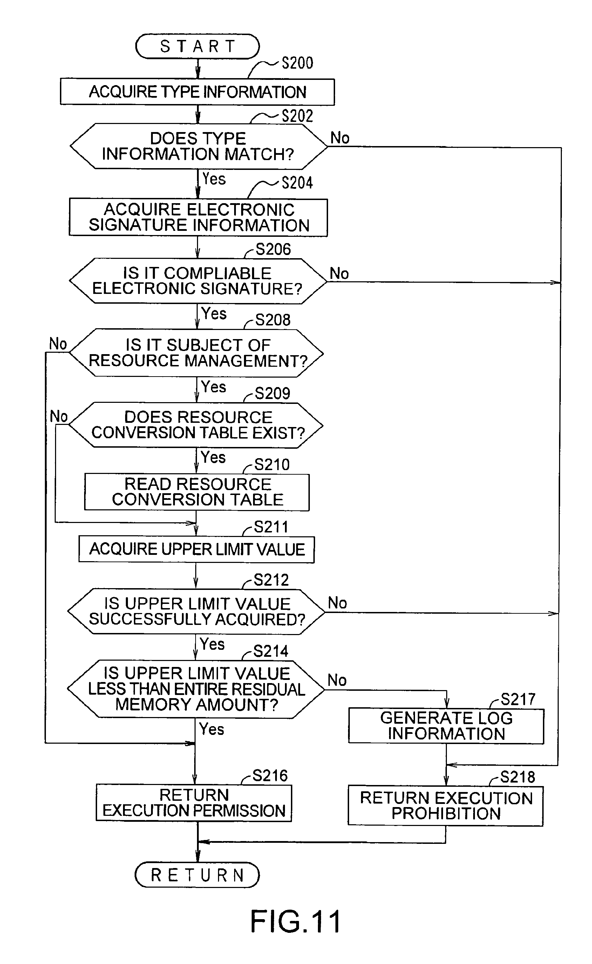

Next, the execution possibility judgment processing of the step S118 will be described in detail with reference to Fig. 11.

Fig. 11 is a flowchart showing the execution possibility judgment processing.

If the execution possibility judgment processing is executed at the step S118, as shown in Fig. 11, first, the process progresses to the step S200.

At the step S200, type information is acquired from the module information 420 included in the individual functional module 130, and then the process progresses to the step S202. At the step S202, it is judged whether or not the acquired type information and type information of the execution environment information registration table 440 match with each other and, when the information match with each other (Yes), the process progresses to the step S204.

At the step S204, the electronic signature information is acquired from the module information 420 included in the individual functional module 130, and then the process progresses to the step S206. At the step S206, on the basis of the execution environment information registration table 440, it is judged whether or not the acquired electronic signature information is compliable and, when it is judged that the electronic signature information is compliable (Yes), the process progresses to the step S208.

At the step S208, on the basis of the module information 420 included in the individual functional module 130, it is judged whether or not the individual functional module 130 is the subject of resource management and, when it is judged that the individual functional module 130 is the subject of the resource management (Yes), the process progresses to the step S209.

At the step S209, it is judged whether or not the resource conversion table 22 corresponding to the execution environment information registration table 440 exists and, when it is judged that the corresponding resource conversion table 22 exists (Yes), the process progresses to the step S210. At the step S210, the corresponding resource conversion table 22 is read from the storage device 42, and then the process progresses to the step S211.

At the step S211, the upper limit value is acquired from the resource limitation information 400 included in the individual functional module 130, and then the process progresses to the step S212. At the step S212, it is judged whether or not the upper limit value is successfully acquired and, when it is judged that the upper limit value is successfully acquired (Yes), the process progresses to the step S214.

At the step S214, it is judged whether or not the acquired upper limit value is less than the entire residual memory amount and, when it is judged that the upper limit value is less than the entire residual memory amount (Yes), the process progresses to the step S216. At the step S216, the return value indicating the execution permission of the individual functional module 130 is returned. Next, a series of steps end, and the process returns to an original state.

On the other hand, at the step S214, when it is judged that the acquired upper limit value is equal to or more than the entire residual memory amount (No), the process progresses to the step S217. At the step S217, log information indicating that the upper limit value is equal to or more than the entire residual memory amount is generated, and the process progresses to the step S218. At the step S218, the return value indicating the execution prohibition of the individual functional module 130 is returned. Next, a series of steps end, and the process returns to an original state.

At the step S212, when it is judged that the upper limit value is not successfully acquired (No), at the step S206, when it is judged that the compliable electronic signature information does not exist (No), or, at the step S202, when it is judged that the type information do not match each other (No), the process progresses to the step S218.

At the step S209, when it is judged that the resource conversion table 22 corresponding to the execution environment information registration table 440 does not exist (No), the process progresses to the step S211.

At the step S208, when it is judged that the individual functional module 130 is not the subject of resource management (No), the process progresses to the step S216.

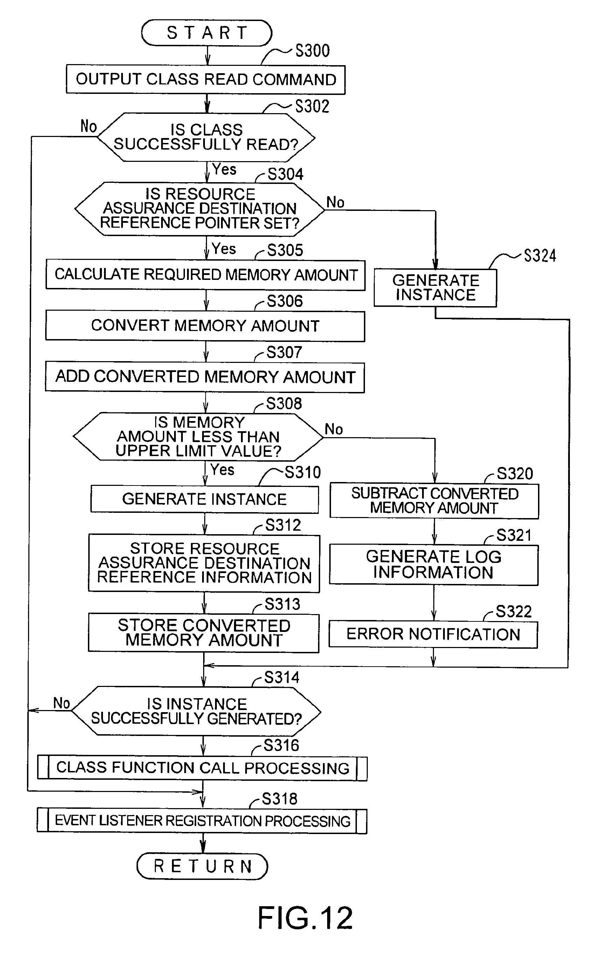

Next, the module activation processing of the steps S130 and S134 will be described in detail with reference to Fig. 12.

Fig. 12 is a flowchart showing the module activation processing.

If the module activation processing is executed in the steps S130 and S134, as shown in Fig. 12, first, the process progresses to the step S300.

At the step S300, a class read command for reading the class from the individual functional module 130 is output, and then the process progresses to the step S302. At the step S302, it is judged whether or not the class read command is successfully read and, when it is judged that the class read command is successfully read (Yes), the process progresses to the step S304.

At the step S304, it is judged whether or not the resource assurance destination reference pointer is set and, when the resource assurance destination reference pointer is set (Yes), the process progresses to the step S305. At the step S305, the memory amount required for the execution of the read class is calculated, and then the process progresses to the step S306.

At the step S306, the memory utilization mode is specified from the library to be utilized by the read class or the like, the conversion rate corresponding to the specified memory utilization mode is acquired from the read resource conversion table 22, and the acquired conversion rate is multiplied to the calculated memory amount, such that the conversion into the memory amount to be utilized in the network printer is performed.

Next, the process progresses to the step S307.
At the step S307, the converted memory amount is added to the utilized memory amount of the resource management table 460 (hereinafter, referred to as reference resource management table 460) indicated by the resource assurance destination reference pointer, and then the process progresses to the step S308. At the step S308, it is judged whether or not the total memory amount to be added is less than the upper limit value of the reference resource management table 460 and, when it is judged that the total memory amount is less than the upper limit value (Yes), the process progresses to the step S310.

At the step S310, an instance of the read class is generated on the memory, and then the process progresses to the step S312. At the step S312, resource assurance destination reference information indicating the value of the resource assurance destination reference pointer is stored in the generated instance, and then the process progresses to the step S313. As the step S313, the converted memory amount is stored in the generated instance, and then the process progresses to the step S314.

At the step S314, it is judged whether or not the instance is successfully generated and, when it is judged that the instance is successfully generated (Yes), the process progresses to the step S316. At the step S316, a class function call processing which calls the function of the read class is executed, and then the process progresses to the step S318. At the step S318, an event listener registration processing which registers the event listener of the individual functional module 130 is executed. Next, a series of steps end, and the process returns to an original state.

On the other hand, at the step S308, when it is judged that the total memory amount is equal to or more than the upper limit value (No), the process progresses to the step S320. At the step S320, the converted memory amount is subtracted from the utilized memory amount of the reference resource management table 460, and then the process progresses to the step S321.

At the step S321, log information indicating that the memory amount to be utilized by the individual functional module 130 reaches the upper limit is generated, and then the process progresses to the step S322. At the step S322, an error notification is performed, and then the process progresses to the step S314.

At the step S304, when it is judged that the resource assurance destination reference pointer is not set (No), the process progresses to the step S324. At the step S324, the instance of the read class is generated on the memory, and then the process progresses to the step S314.

At the step S314, when it is judged when the instance is not successfully generated (No) or, at the step S302, when it is judged that the class is not successfully read (No), the process progresses to the step S318.

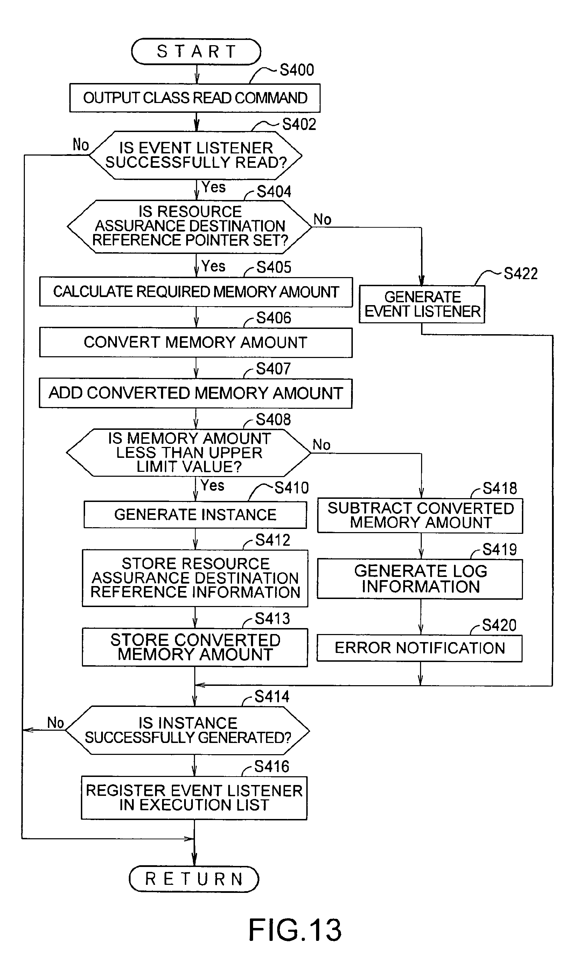

Next, the event listener registration processing of the step S318 will be described in detail with reference to Fig. 13.

Fig. 13 is a flowchart of the event listener registration processing.

If the event listener registration processing is executed at the step S318, as shown in Fig. 13, first, the process progresses to the step S400.

At the step S400, a class read command for reading an event listener class from the individual functional module 130 is output, and then the process progresses to the step S402. At the step S402, it is judged whether or not the event listener class is successfully read and, when it is judged that the event listener class is successfully read (Yes), the process progresses to the step S404.

At the step S404, it is judged whether or not the resource assurance destination reference pointer is set and, when it is judged that the resource assurance destination reference is set (Yes), the process progresses to the step S405. At the step S405, a memory amount required for the execution of the read event listener class is calculated, and then the process progresses to the step S406.

At the step S406, the memory utilization mode is specified from the library to be utilized by the read event listener class or the like, the conversion rate corresponding to the specified memory utilization mode is acquired from the read resource conversion table 22, and the acquired conversion rate is multiplied to the calculated memory amount, such that the conversion into the memory amount to be utilized in the network printer is performed.

Next, the process progresses to the step S407. At the step S407, the converted memory amount is added to the utilized memory amount of the reference resource management table 460, and then the process progresses to the step S408. At the step S408, it is judged whether or not the total memory amount to be added is less than the upper limit value of the reference resource management table 460 and, when it is judged that the total memory amount is less than the upper limit value (Yes), the process progresses to the step S410.

At the step S410, the instance of the read event listener class is generated on the memory, and then the process progresses to the step S412. At the step S412, the resource assurance destination reference information indicating the value of the resource assurance destination reference pointer is stored in the generated instance, and then the process progresses to the step S413. At the step S413, the converted memory amount is stored in the generated instance, and then the process progresses to the step S414.

At the step S414, it is judged whether or not the instance is successfully generated and, when it is judged that the instance is successfully generated (Yes), the process progresses to the step S416. At the step S416, the event listener of the generated instance is registered in an event listener execution list. Next, a series of steps end, and the process returns to an original state.

On the other hand, at the step S408, when it is judged that the total memory amount is equal to or more than the upper limit value (No), the process progresses to the step S418. At the step S418, the converted memory amount is subtracted from the utilized memory amount of the reference resource management table 460, and then the process progresses to the step S419.

At the step S419, log information indicating that the memory amount to be utilized by the individual functional module 130 reaches the upper limit is generated, and then the process progresses to the step S420. At the step S420, an error notification is performed, and the process progresses to the step S414.

At the step S404, when it is judged that the resource assurance destination reference pointer is not set (No), the process progresses to the step S422. At the step S422, the instance of the read event listener class is generated on the memory, and the process progresses to the step S414.

At the step S414, when it is judged that the instance is not successfully generated (No) or, at the step S402, when it is judged that the event listener class is not successfully read (No), a series of steps end, and the process returns to an original state.

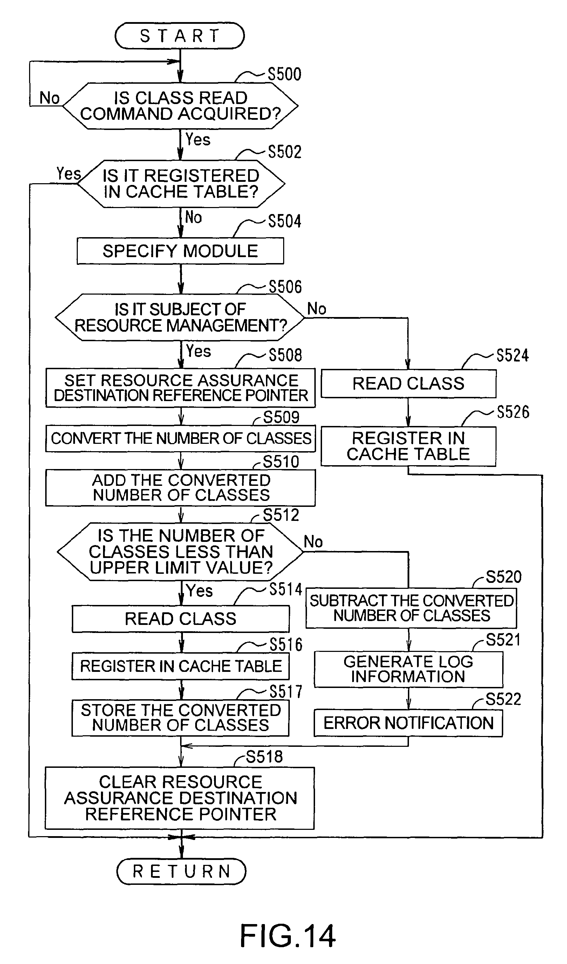

Next, the class read processing will be described in detail with reference to Fig. 14.

Fig. 14 is a flowchart showing the class read processing.

The class read processing is a processing for reading the class according to the class read command. If the class read processing is executed in the CPU 30, as shown in Fig. 14, first, the process progresses to the step S500.

At the step S500, it is judged whether or not the class read command is acquired and, when it is judged that the class read command is acquired (Yes), the process progresses to the step S502. When it is judged that the class read command is not acquired (No), the process waits at the step S500 until the class read command is acquired.

At the step S502, it is judged whether or not the class on the class read command is registered in a cache table and, when it is judged that the class is not registered in the cache table (No), the process progresses to the step S504.

At the step S504, the individual functional module 130, to which the class on the class read command belongs, is specified, and then the process progresses to the step S506. At the step S506, on the basis of the module information 420 included in the specified individual functional module 130, it is judged whether or not the individual functional module 130 is the subject of resource management and, when it is judged that the corresponding individual functional module 130 is the subject of resource management (Yes), the process progresses to the step S508.

At the step S508, the address of the resource management table 460 corresponding to the corresponding individual functional module 130 is set to the resource assurance destination reference pointer, and then the process progresses to the step S509.

At the step S509, the conversion rate corresponding to the number of classes is acquired from the read resource conversion table 22, and the acquired conversion rate is multiplied to the number of classes on the class read command, that is, '1', such that the conversion into the number of classes to be activated in the network printer is performed.

Next, the process progresses to the step S510. At the step S510, the converted number of classes is added to the number of active classes of the reference resource management table 460, and then the process progresses to the step S512. At the step S512, it is judged whether or not the total number of classes to be added is less than the upper limit value of the reference resource management table 460 and, when it is judged that the total number of classes is less than the upper limit value (Yes), the process progresses to the step S514.

At the step S514, the class on the class read command is read from the individual functional module 130, and then the process progresses to the step S516. At the step S516, the read class is registered in the cache table, and then the process progresses to the step S517.

At the step S517, the converted number of classes is stored in the read class, and then the process progresses to the step S518. At the step S518, the resource assurance destination reference is cleared. Next, a series of steps end, and the process returns to an original state.

On the other hand, at the step S512, when it is judged that the total number of classes is equal to or more than the upper limit value (No), the process progresses to the step S520. At the step S520, the converted number of classes is subtracted from the number of active classes of the reference resource management table 460, and then the process progresses to the step S521.

At the step S521, log information indicating that the number of classes to be activated by the individual functional module 130 reaches the upper limit is generated, and then the process progresses to the step S522. At the step S522, an error notification is performed, and then the process progresses to the step S518.

At the step S506, when it is judged that the corresponding individual functional module 130 is not the subject of resource management (No), the process progresses to the step S524. At the step 5524, the class on the class read command is read from the individual functional module 130, and then the process progresses to the step S526. At the step S526, the read class is registered in the cache table. Next, a series of steps end, and the process returns to an original state.

At the step S502, when it is judged that the class on the class read command is registered in the cache table (Yes), a series of steps end, and the process returns to an original state.

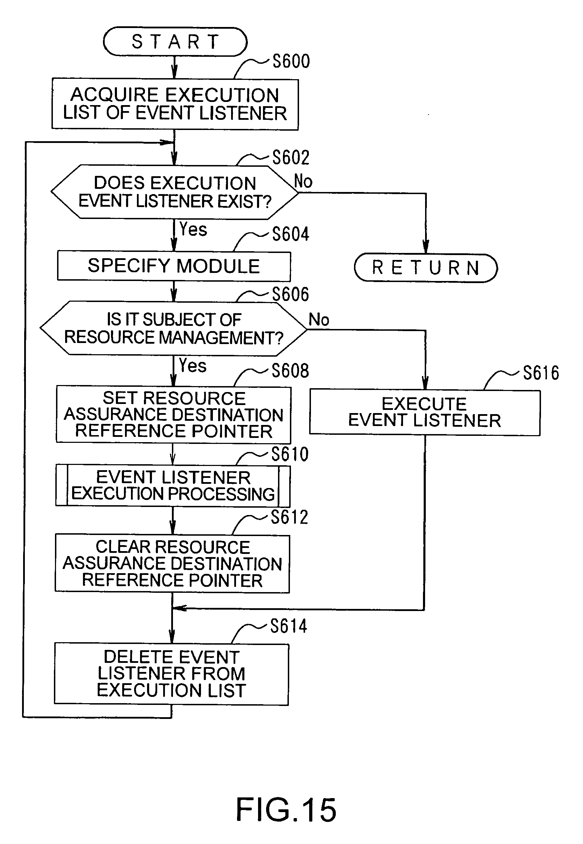

Next, an event listener control processing will be described in detail with reference to Fig. 15.

Fig. 15 is a flowchart showing the event listener control processing.

The event listener control processing is a processing which controls the execution of the event listener. If the event listener control processing is executed in the CPU 30, as shown in Fig. 15, first, the process progresses to the step S600.

At the step S600, an event listener execution list is acquired, and then the process progresses to the step S602. At the step S602, on the basis of the acquired event listener execution list, it is judged whether or not the event listener to be executed exists and, when it is judged that the event listener to be executed exists (Yes), the process progresses to the step S604.

At the step S604, the individual functional module 130, which is the source of the corresponding event listener, is specified, and then the process progresses to the step S606. At the step S606, on the basis of the module information 420 included in the specified individual functional module 130, it is judged whether or not the corresponding individual functional module 130 is the subject of resource management and, when the corresponding individual functional module 130 is the subject of resource management (Yes), the process progresses to the step S608.

At the step S608, the address of the resource management table 460 corresponding to the corresponding individual functional module 130 is set to the resource assurance destination reference pointer, and then the process progresses to the step S610. At the step S610, an event listener execution processing which runs the corresponding event listener is executed, and then the process progresses to the step S612. At the step S612, the resource assurance destination reference pointer is cleared, and then the process progresses to the step S614.

At the step S614, the corresponding event listener is deleted from the event listener execution list, and then the process progresses to the step S602.

On the other hand, at the step S606, when it is judged that the corresponding individual functional module 130 is not the subject of resource management (No), the process progresses to the step S616. At the step S616, the corresponding event listener is executed, and then the process progresses to the step S614.

At the step S602, when it is judged that the event listener to be executed does not exist (No), a series of steps end, and the process returns to an original state.

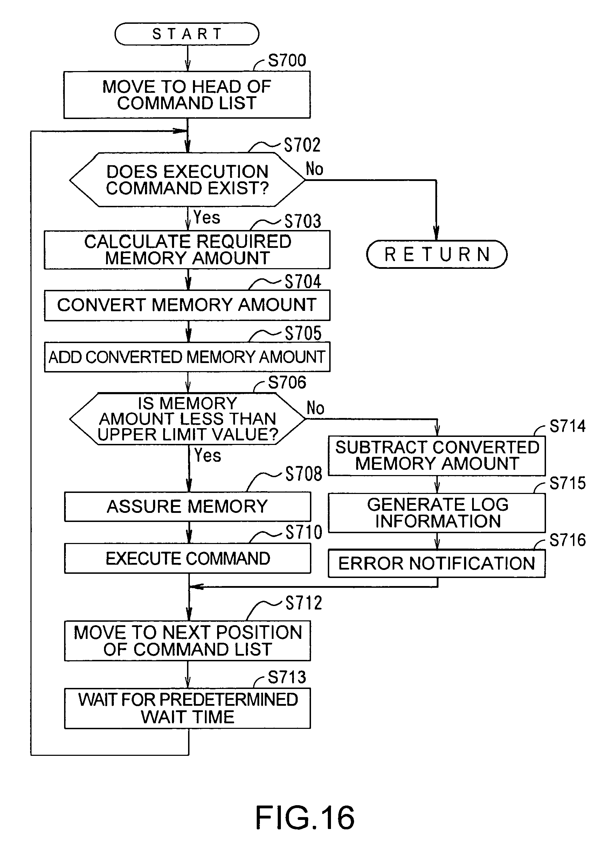

Next, the event listener execution processing of the step S610 will be described in detail with reference to Fig. 16.

Fig. 16 is a flowchart showing the event listener execution processing.

If the event listener execution processing is executed in the step S610, as shown in Fig. 16, first, the process progresses to the step S700.

At the step S700, a program pointer is moved to the head of a command list included in the event listener, and then the process progresses to the step S702. At the step S702, it is judged whether or not a command to be executed exists in an address indicated by the program pointer and, when it is judged that the command to be executed exists (Yes), the process progresses to the step S703. At the step S703, the memory amount required for command execution is calculated, and then the process progresses to the step S740.

At the step S704, the memory utilization mode is specified from the library to be utilized for the command execution or the like, the conversion rate corresponding to the specified memory utilization mode is acquired from the read resource conversion table 22, and the acquired conversion rate is multiplied to the calculated memory amount, such that the conversion into the memory amount to be utilized in the network printer is performed.

Next, the process progresses to the step S705. At the step S705, the converted memory amount is added to the utilized memory amount of the reference resource management table 460, and then the process progresses to the step S706. At the step S706, it is judged whether or not the total memory amount to be added is less than the upper limit value of the reference resource management table 460 and, when the total memory amount is less than the upper limit value (Yes), the process progresses to the step S708.

At the step S708, the memory is assured, and then the process progresses to the step S710. At the step S710, the command of the address indicated by the program pointer is executed, and then the process progresses to the step S712. At the step S712, the program pointer is moved to a next position of the command list included in the event listener, and then the process progresses to the step S713. At the step S713, the processing waits for predetermined wait time, and then the process progresses to the step S702. The determination of the wait time will be described in detail by way of an embodiment described below.

On the other hand, at the step S706, when it is judged that the total memory amount is equal to or more than the upper limit value (No), the process progresses to the step S714. At the step S714, the converted memory amount is subtracted from the utilized memory amount of the reference resource management table 460, and then the process progresses to the step S715.

At the step S715, log information indicating that the memory amount to be utilized by the individual functional module 130 reaches the upper limit is generated, and then the process progresses to the step S716. At the step S716, an error notification is performed, and then the process progresses to the step S712.

At the step S702, when it is judged that the command to be executed does not exist (No), a series of steps end, and the process returns to an original state.

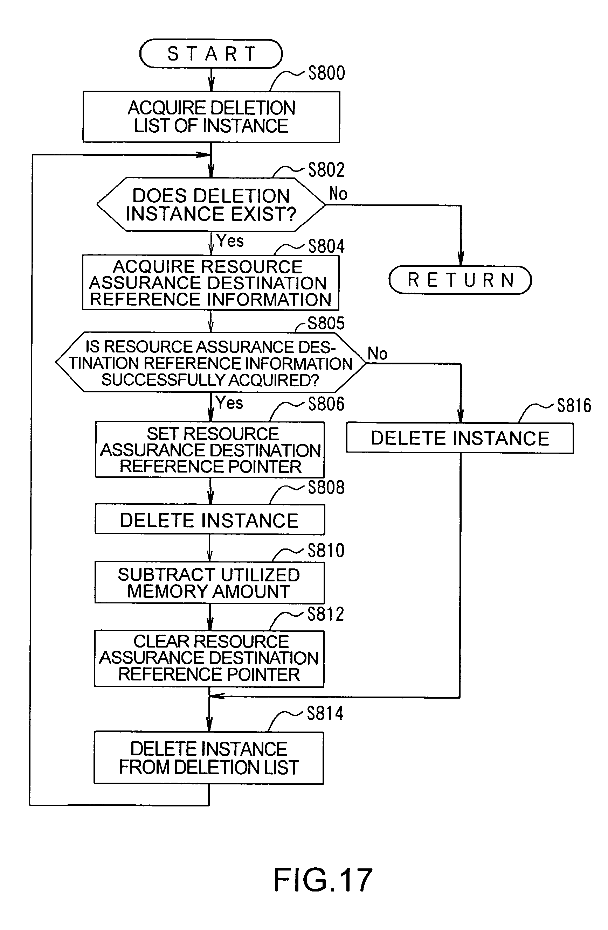

Next, an instance deletion processing will be described in detail with reference to Fig. 17.

Fig. 17 is a flowchart showing the instance deletion processing.

The instance deletion processing is a processing which deletes the instance. If the instance deletion processing is executed in the CPU 30, as shown in Fig. 17, first, the process progresses to the step S800.

At the step S800, an instance deletion list in which an instance to be deleted is registered is acquired, and then the process progresses to the step S802. At the step S802, on the basis of the acquired instance deletion list, it is judged whether or not the instance to be deleted exists and, when the instance to be deleted exists (Yes), the process progresses to the step S804.

At the step S804, the resource assurance destination reference information is acquired from the corresponding instance, and then the process progresses to the step S805. At the step S805, it is judged whether or not the resource assurance destination reference information is successfully acquired and, when it is judged that the resource assurance destination reference information is successfully acquired (Yes), the process progresses to the step S806.

At the step S806, the resource assurance destination reference pointer is set on the basis of the acquired resource assurance destination reference information, and then the process progresses to the step S808. At the step S808, the corresponding instance is deleted, and then the process progresses to the step S810. At the step S810, the memory amount required for the execution of the corresponding instance is subtracted from the utilized memory amount of the reference resource management table 460, and then the process progresses to the step S812.

At the step S812, the resource assurance destination reference pointer is cleared, and then the process progresses to the step S814. At the step S814, the corresponding instance is deleted from the instance deletion list, and then the process progresses to the step S802.

On the other hand, at the step S805, when it is judged that the resource assurance destination reference information is not successfully acquired (No), the process progresses to the step S816. At the step S816, the corresponding instance is deleted, and then the process progresses to the step S814.

At the step S802, when it is judged that the instance to be deleted does not exist (No), a series of steps end, and the process returns to an original state.

Next, the operation of the present embodiment will be described.

First, a case in which the individual functional module 130 as the subject of resource management is executed will be described.

In the host terminal 100, the individual functional module control processing is executed by the execution of the common functional module 120. In the individual functional module control processing, through the steps S102 to S110, when the individual functional module 130 to be deleted exists, the individual functional module 130 is deleted. Next, at the step S114, when it is judged that the number of currently active classes is less than the predetermined upper limit value, through the steps S116 and S118, the corresponding individual functional module 130 is read, and execution possibility of the read individual functional module 130 is judged. In the execution possibility judgment processing, for the individual functional module 130, the execution is permitted when the matching type information and the compliable electronic signature information are provided and the upper limit value of the usable memory amount is less than the entire residual memory amount.

If the execution of the individual functional module 130 is permitted, through the steps S124 to S128, the resource management table 460 is generated, and the number of currently active modules increments by '1', and the individual functional module 130 is activated. In the module activation processing, through the steps S509, S510, and S305 to S307, the number of active classes and the utilized memory amount of the individual functional module 130 are converted into the number of active classes and the utilized memory amount in the network printer and are added. At this time, if any one of the number of active classes and the utilized memory amount is equal to or more than the upper limit value, through the steps S521 and S522 or the steps S321 and S322, the log information indicating that the number of active classes or the utilized memory amount of the individual functional module 130 reaches the upper limit is generated and simultaneously the error notification is performed, such that the read of the class or the generation of the instance is stopped.

When both of the number of active classes and the utilized memory amount are less than the upper limit value, through the steps S514, S310, and S318, the class of the individual functional module 130 is read, the instance of the read class is generated, and the event listener of the individual functional module 130 is registered. In the event listener registration processing, through the steps S509, S510, and S405 to S407, the number of active classes and the utilized memory amount of the individual functional module 130 are converted into the number of active classes and the utilized memory amount in the network printer and are added. At this time, if any one of the number of active classes and the utilized memory amount is equal to or more than the upper limit value, through the steps S521 and S522 or the steps S419 and S420, the log information indicating that the number of active classes or the utilized memory amount of the individual functional module 130 reaches the upper limit is generated and simultaneously the error notification is performed, such that reading of the event listener class or generating of the instance are stopped.

When both of the number of active classes and the utilized memory amount are less than the upper limit value, through the steps S514, S410, and S416, the event listener class is read, the instance of the event listener class is generated, and the event listener of the generated instance is registered in the event listener execution list.

Further, in the host terminal 100, the event listener control processing is executed by the execution of the common functional module 120. In the event listener control processing, through the steps S703 to S705, the utilized memory amount of the individual functional module 130, which is the source of the event listener to be executed, is converted into the utilized memory amount in the network printer and is added. At this time, if the utilized memory amount is equal to or more than the upper limit value, through the steps S715 and S716, the log information indicating that the memory amount to be utilized by the individual functional module 130 reaches the upper limit is generated and simultaneously the error notification is performed, such that the execution of the event listener is stopped.

When the utilized memory amount is less than the upper limit value, through the step S710, the command included in the event listener is executed.

Further, in the host terminal 100, the instance deletion processing is executed by the execution of the common functional module 120. In the instance deletion processing, when the instance to be deleted exists, through the steps S808 and S810, the instance is deleted, and the utilized memory amount of the individual functional module 130, which is the source of the event listener, is subtracted.

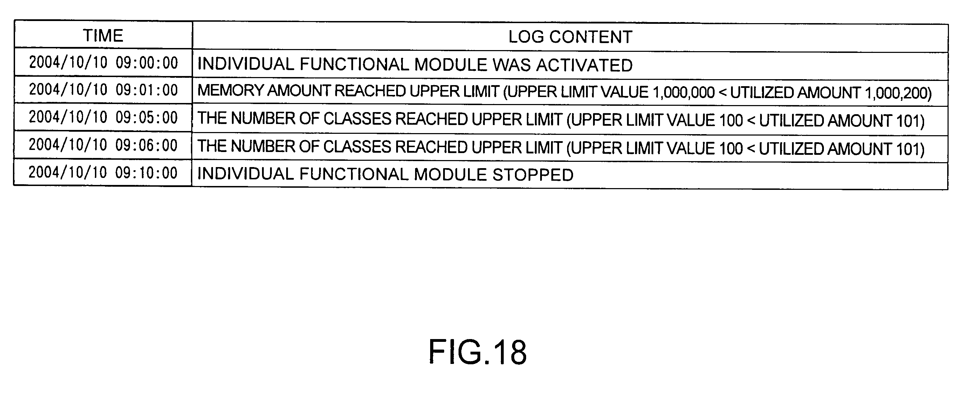

Fig. 18 is a diagram showing the contents of a log file when an error occurs.

When an error occurs, in the log file, as shown in Fig. 18, the log information indicating that the number of active classes or the utilized memory amount of the individual functional module 130 reaches the upper limit is recorded, in addition to the log information indicating that the individual functional module 130 is activated and stopped.

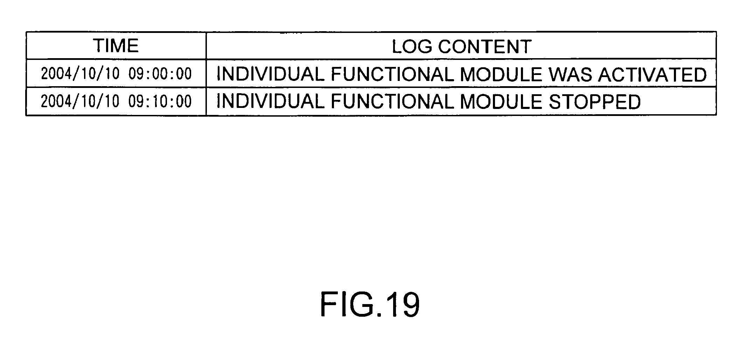

Fig. 19 is a diagram showing the contents of a log file when an error does not occur.

When an error does not occur, in the log file, as shown in Fig. 19, only the log information indicating that the individual functional module 130 is activated and stopped is recorded.

Next, a case in which the individual functional module 130 that is not the subject of resource management, is executed will be described.

In the host terminal 100, if the individual functional module control processing is executed, through the steps S116 and S118, the corresponding individual functional module 130 is read and the execution possibility of the read individual functional module 130 is judged.

If the execution of the individual functional module 130 is permitted, through the step S134, the individual functional module 130 is activated. In the module activation processing, through the steps S524, S324, and S318, the class of the individual functional module 130 is read, the instance of the read class is generated, and the event listener of the individual functional module 130 is registered. In the event listener registration processing, through the steps S524, S422, and S416, the event listener class is read, the instance of the event listener class is generated, and the event listener of the generated instance is registered in the event listener execution list.

On the other hand, in the host terminal 100, if the event listener control processing is executed, through the step S616, the command included in the event listener to be executed is executed.

Further, in the host terminal 100, if the instance deletion processing is executed, when the instance to be deleted exists, through the step S816, the instance is deleted.

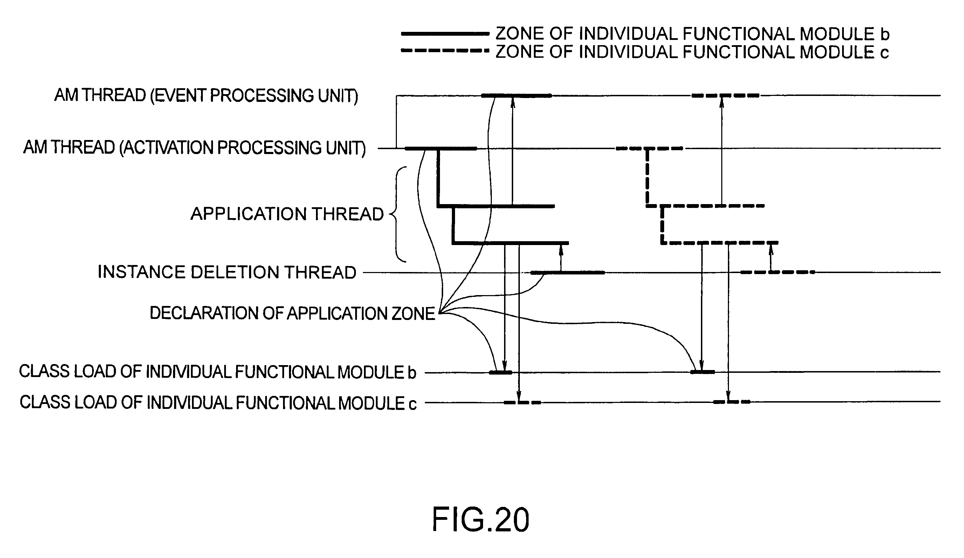

Fig. 20 is a time chart when the individual functional modules b and c, which are the subjects of resource management, are executed in parallel.

In Fig. 20, solid lines represent a thread of the individual functional module b and a thread to be utilized for the execution of the individual functional module b from threads of the common functional module 120. Further, one-dot-chain lines represent a thread of the individual functional module c and a thread to be utilized for the execution of the individual functional module c from the threads of the common functional module 120.

If the individual functional module b is executed, an AM thread (activation processing unit) of the common functional module 120 is executed, and the individual functional module b is activated so as to execute its thread. Further, the AM thread of the common functional module 120 is executed, and the event listener of the individual functional module b is generated. Next, if the event corresponding to the individual functional module b is generated, an AM thread (event processing unit) of the common functional module 120 is executed, the class of the individual functional module b is read, and the instance of the read class is generated. When the individual functional module b is not required, an instance deletion thread of the common functional module 120 is executed and the instance of the individual functional module b is deleted. In a series of steps, the number of active classes and the utilized memory amount, which increment and decrement according to the execution of the threads of the common functional module 120 and the individual functional module b, are managed as the resource amount to be utilized by the individual functional module b, and are limited so as to be less than the predetermined upper limit value set in the individual functional module b.

This operation is also applied to the individual functional module c. However, in a series of steps, the number of active classes and the utilized memory amount, which increment and decrement according to the execution of the threads of the common functional module 120 and the individual functional module c, are managed as the resource amount to be utilized by the individual functional module c, and are limited so as to be less than the predetermined upper limit value set in the individual functional module c.

In such a manner, in the present embodiment, the resource amount to be utilized by the individual functional module 130 in the host terminal 100 is measured, the measured resource amount is converted into the resource amount to be utilized in the network printer, and the upper limit value is acquired from the individual functional module 130. Subsequently, on the basis of the converted resource amount and the acquired upper limit value, the log information indicating that the resource amount to be utilized by the individual functional module 130 reaches the upper limit is generated.

Accordingly, it is possible to verify whether the resource amount to be utilized by the individual functional module 130 in the network printer reaches the upper limit value of the resource, before the introduction into the network printer. Therefore, as compared with the related art, software development can be easily performed and software can be developed with high stability.

Further, in the present embodiment, it is configured such that, for the individual functional module 130 which is the subject of resource management, the memory amount to be utilized by the individual functional module 130, and the memory amount to be utilized by the common functional module 120 for the execution of the individual functional module 130 and the number of active classes are measured.

Accordingly, it is possible to verify whether-or not the resource amount to be utilized by the common functional module 120 in the network printer reaches the upper limit value of the resource, in units of the individual functional module 130.

Further, in the present embodiment, it is configured such that the individual functional module 130 is prohibited from assuring the resource, on the basis of the converted resource amount and the acquired upper limit value.

Accordingly, it is possible to limit the individual functional module 130 to utilize the resource amount in excess of the upper limit value.

Further, in the present embodiment, it is configured such that the conversion is performed on the basis of the resource conversion table 22, in which the conversion rate determined the resource amount to be utilized under a predetermined condition in the host terminal 100 and the resource amount to be utilized under the same predetermined condition in the network printer is registered.

Accordingly, it is possible to accurately convert the resource amount between the host terminal 100 and the network printer.

Further, in the present embodiment, it is configured such that the corresponding conversion rate is acquired from the resource conversion table 22 according to the resource types to be utilized by the common functional module 120 and the individual functional module 130, and the conversion is performed on the basis of the acquired conversion rate.

Accordingly, the conversion can be performed according to the resource types to be utilized by the common functional module 120 and the individual functional module 130. Therefore, it is possible to accurately convert the resource amount between the host terminal 100 and the network printer.

Further, in the present embodiment, it is configured such that the corresponding conversion rate is acquired from the resource conversion table 22 according to the resource modes to be utilized by the common functional module 120 and the individual functional module 130, and the conversion is performed on the basis of the acquired conversion rate.

Accordingly, the conversion can be performed according to the resource modes to be utilized by the common functional module 120 and the individual functional module 130. Therefore, it is possible to accurately convert the resource amount between the host terminal 100 and the network printer.

Further, in the present embodiment, when the conversion rate are determined on the basis of the resource amounts to be utilized by the plurality of test modules in the host terminal 100 and the network printer, the maximum from the conversion rates determined for the respective test modules is registered in the resource conversion table 22.

Accordingly, since the maximum from the conversion rates determined for the respective test modules is registered in the resource conversion table 22, it is possible to estimate the sufficient resource amount to be utilized by the common functional module 120 and the individual functional module 130. Therefore, it is possible to reliably assure the operation of the individual functional module 130.

In the first embodiment, the resource measuring unit 16 and the steps S305, S405, and S703 correspond to the resource measuring unit according to one of the first to fourth aspects of the invention, the step S305, S405, and S703 correspond to the measuring the resource amount according to one of the seventeenth to twentieth aspects and the thirty-third to thirty-ninth aspects of the invention, and the resource converting unit 24 and the steps S306, S406, S509, and S704 correspond to the resource converting unit according to one of the first, second, and fourth to eighth aspects of the invention. Further, the steps S306, S406, S509, and S704 correspond to the converting the resource amount according to one of the seventeenth, eighteenth, twentieth to twenty-fourth, thirty-third to thirty-sixth, and thirty-eighth to forty-third aspects of the invention, and the upper limit value acquiring unit 18 and the step S211 correspond to the resource limitation information acquiring unit according to one of the first, second, fourth, and fifth aspects of the invention.

Further, in the first embodiment, the step S211 corresponds to the acquiring the resource limitation information according to one of the seventeenth, eighteenth, twentieth, twenty-first, thirty-third to thirty-sixth, and thirty-eighth to fortieth aspects of the invention, and the log information generating unit 26 and the steps S321, S419, S521, and S715 correspond to the resource limitation notifying unit according to one of the first, second, fourth, and twelfth aspects of the invention. Further, the steps S321, S419, S521, and S715 correspond to the performing the notification on resource limitation according to one of the seventeenth, eighteenth, twentieth, twenty-eighth, thirty-third to thirty-sixth, thirty-eighth, thirty-ninth, and forty-seventh aspects of the invention, and the resource limiting unit 20 and the steps S308, S408, S512, and S706 correspond to the resource limiting unit according to the fifth aspect of the invention.

Further, in the first embodiment, the steps S308, S408, S512, and S706 correspond to the prohibiting the resource limitation according to the twentieth or fortieth aspect of the invention, the common functional module 120 corresponds to the first functional module according to one of the second to fourth, eighteenth to twentieth, and thirty-fifth to thirty-ninth aspects of the invention, and the individual functional module 130 corresponds to the second functional module according to one of the second to fourth, eighteenth to twentieth, and thirty-fifth to thirty-ninth aspects of the invention. Further, the CPU 30 corresponds to the arithmetic unit according to one of the thirty-fourth, thirty-sixth, and thirty-ninth aspects of the invention.

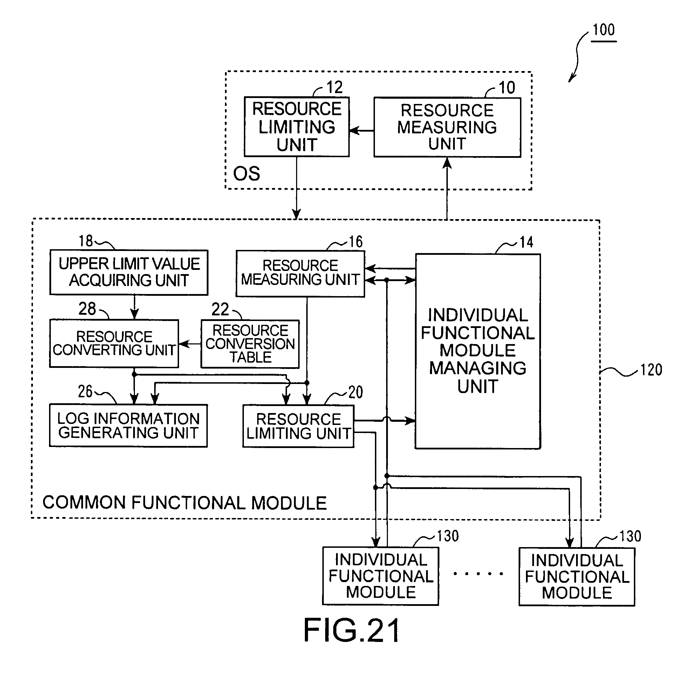

Next, a second embodiment of the invention will be described with reference to the drawings. Figs. 21 to 24 are diagrams showing a resource management system, a resource management program, and a resource management method according to the second embodiment of the invention.

In the present embodiment, as shown in Fig. 21, the resource management system, the resource management program, and the resource management method according to the invention are applied to a case in which a JAVA (Registered Trademark) class set is emulated in order to control the operation of a network printer in an execution environment of a JAVA (Registered Trademark) application on a host terminal 100. The second embodiment is different from the first embodiment in that the upper limit value of the resource is converted. Hereinafter, only the different parts from the first embodiment are described. The same parts as those in the first embodiment are represented by the same reference numerals, and thus the descriptions thereof will be omitted.

First, the functional outline of a host terminal 100, to which the invention is applied, will be described.

Fig. 21 is a block diagram showing the functional outline of the host terminal 100.

As shown in Fig. 21, the common functional module 120 has a resource converting unit 28 that converts a resource amount, in addition to an individual functional module managing unit 14, a resource measuring unit 16, an upper limit value acquiring unit 18, a resource limiting unit 20, a resource conversion table 22, a log information generating unit 26.

The resource converting unit 28 converts the resource amount acquired by the upper limit value acquiring unit 18 into the upper limit value of the resource in the host terminal 100 on the basis of the resource conversion table 22.

The resource limiting unit 20 limits the resource amount to be utilized by the individual functional module 130 and the resource amount to be utilized by the individual functional module managing unit 14 for the execution of the individual functional module 130 such that the resource amount measured by the resource measuring unit 16 is less than the upper limit value converted by the resource converting unit 28.

When it is judged that the resource amount measured by the resource measuring unit 16 is equal to or more than the upper limit value converted by the resource converting unit 28, the log information generating unit 26 generates the log information indicating that the resource amount to be utilized by the individual functional module 130 reaches the upper limit.

Next, the configuration of the host terminal 100 will be described in detail.

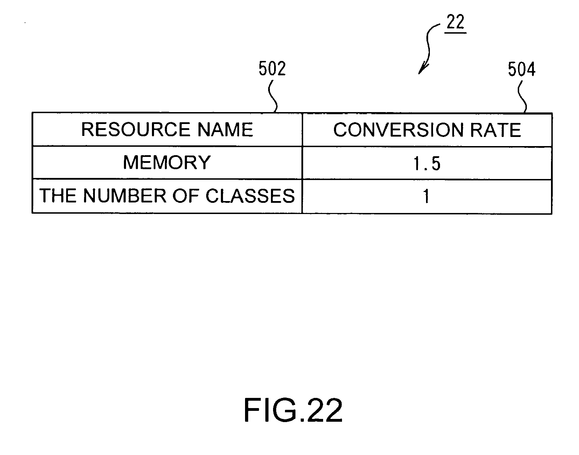

The storage device 42 stores the resource conversion table 22 of Fig. 22, instead of the resource conversion table 22 of Fig. 7.

Fig. 22 is a diagram showing the data structure of the resource conversion table 22.

In the resource conversion table 22, as shown in Fig. 22, one record is registered for each resource type or utilization mode. Each record is configured to include a field 502 that registers the resource name and a field 504 that registers the conversion rate.

In the example of Fig. 22, in the first record, 'MEMORY' and '1' are registered as the resource name and the conversion rate, respectively. This represents that the conversion into the upper limit value of the memory amount in the host terminal 100 is performed through the division of the upper limit value of the number of classes to be activated by the individual functional module 130 in the network printer by '1'.

Further, in the second record, 'THE NUMBER OF CLASSES' as the resource name and '1' as the conversion rate are registered. This represents that the conversion into the number of classes activated in the host terminal 100 is performed through the division of the upper limit value of the number of classes to be activated by the individual functional module 130 in the network printer by '1'.

Moreover, when the conversion rate is determined on the basis of resource amounts to be utilized by each of a plurality of test modules in the host terminal 100 and the network printer, the maximum from the conversion rates determined for the respective test modules is registered in the resource conversion table 22. The generation of the resource conversion table 22 will be described in detail by way of an embodiment described below.

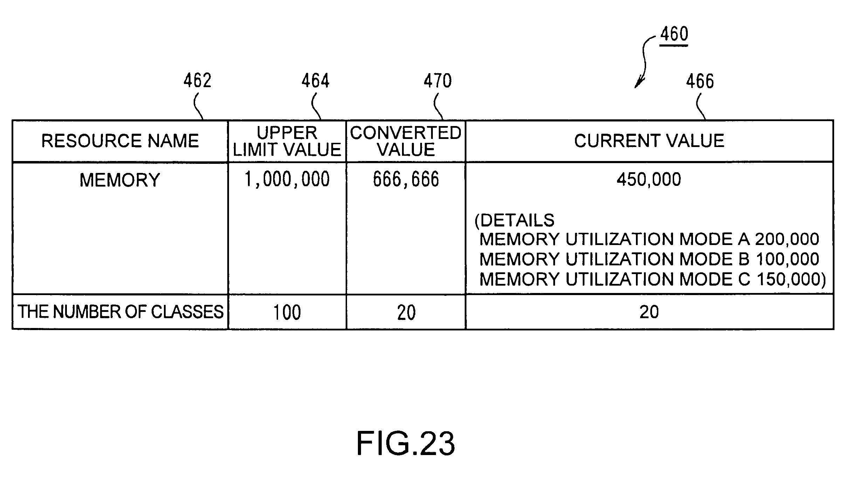

The storage device 42 also stores a resource management table 460 of Fig. 23, instead of the resource management table 460 of Fig. 8.

Fig. 23 is a diagram showing the data structure of the resource management table 460.

In the resource management table 460, as shown in Fig. 23, one record is registered for each resource type. Each record is configured to include a field 462 that registers the resource name, a field 464 that registers the upper limit value of the resource to be utilized by the individual functional module 130 in the network printer, a field 470 that registers a value obtained through the conversion of the value of the field 464 into the upper limit value of the resource in the host terminal 100, and a field 466 that registers the resource amount currently utilized by the individual functional module 130 in the host terminal 100.

In the example of Fig. 23, '1000000' and '666666' are registered in the first record as the upper limit value and the converted value, respectively. This represents that the upper limit value of the memory amount to be utilized by the individual functional module 130 in the network printer is 1000000 [byte], and the value converted into the upper limit value of the memory amount in the host terminal 100 (hereinafter, referred to as converted memory upper limit value) is 666666 [byte]. The converted memory upper limit values can be calculated through the calculation 1000000 / 1.5 = 666666, with reference to the resource conversion table 22 of Fig. 22.

Further, in the second record, '100' and '20' are registered as the upper limit value and the converted value, respectively. This represents that the upper limit value of the number of classes to be activated by the individual functional module 130 in the network printer is 100, and the value converted into the upper limit value of the number of classes to be activated in the host terminal (hereinafter, referred to as converted class upper limit value). The converted class upper limit value can be calculated through the calculation 20 / 1 = 20, with reference to the resource conversion table 22 of Fig. 22.

Next, processings to be executed in the host terminal 100 will be described.

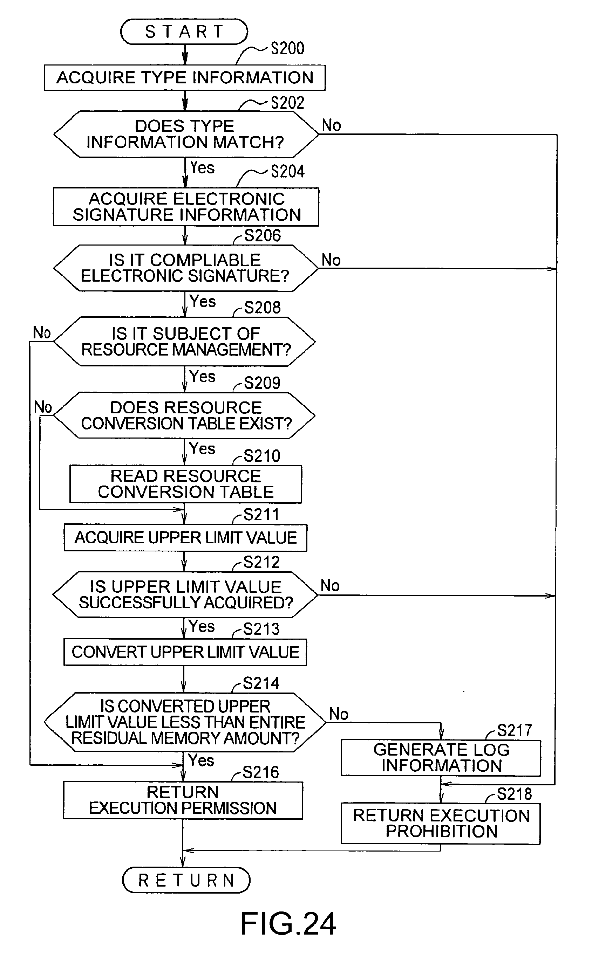

The CPU 30 executes an execution possibility judgment processing shown in a flowchart of Fig. 24, instead of the execution possibility judgment processing of Fig. 11.

Fig. 24 is a flowchart showing the execution possibility judgment processing.

If the execution possibility judgment processing is executed in the step S118, as shown in Fig. 24, first, the process progresses to the step S213 through the steps S200 to S212.

At the step S213, the conversion rate corresponding to the acquired upper limit value is acquired from the read resource conversion table 22, and the acquired upper limit value is divided by the acquired conversion rate, such that the conversion into the upper limit value in the host terminal 100 is performed.

Next, the process progresses to the step S214. At the step S214, it is judged whether or not the converted memory upper limit value is less than the entire residual memory amount and, when it is judged that the converted memory upper limit value is less than the entire residual memory amount (Yes), the process progresses to the step S216. When it is judged that the converted memory upper limit value is equal to or more than the entire residual memory amount (No), the process progresses to the step S217.

Moreover, though the steps S306, S406, S509, and S704 are provided in the first embodiment, in the present embodiment, these steps are not required.

Further, at the steps S313, S320, S418, S517, S520, and S714, though the converted memory amount and the converted number of classes are handled in the first embodiment, in the present embodiment, the utilized memory amount and the number of active classes in the host terminal 100 are handled.

Further, at the steps S308, S408, S512, and S706, though the utilized memory amount and the number of active classes in the network printer are handled in the first embodiment, in the present embodiment, the converted memory upper limit value and the converted memory are handled.

Next, the operation of the present embodiment will be described.

First, a case in which the individual functional module 130 as the subject of resource management is executed will be described.

In the host terminal 100, the individual functional module control processing is executed through the execution of the common functional module 120. In the individual functional module control processing, through the steps S102 to S110, when the individual functional module 130 to be deleted, the individual functional module 130 is deleted. Next, at the step S114, if it is judged that the number of currently active modules is less than the upper limit value, through the steps S116 and S118, the corresponding individual functional module 130 is read, and the execution possibility of the read individual functional module 130 is judged. In the execution possibility judgment processing, through the step S213, the upper limit value acquired from the resource limitation information 400 is converted into the upper limit value in the host terminal 100. Next, for the individual functional module 130, when the matching type information and the compliable electronic signature information are provided and the converted memory upper limit value is less than the entire residual memory amount, the execution is permitted.

If the execution of the individual functional module 130 is permitted, through the steps S124 to S128, the resource management table 460 is generated, the number of currently active modules is increased by '1', and the individual functional module 130 is activated. In the module activation processing, through the steps S510, S305, and S307, the number of active classes and the utilized memory amount of the individual functional module 130 are added. At this time, when any one of the number of active classes and the utilized memory amount is equal to or more than the converted upper limit value (referred to as the converted number of classes or converted memory upper limit value) (the same is applied to the following description), through the steps S521 and S522 or the steps S321 and S322, the log information indicating that the number of active classes or the utilized memory amount of the individual functional module 130 reaches the upper limit is generated and simultaneously the error notification is performed, such that reading of the class or generating of the instance is stopped.

When both of the number of active classes and the utilized memory amount are less than the converted upper limit value, through the steps S514, S310, and S318, the class of the individual functional module 130 is read, the instance of the read class is generated, and the event listener of the individual functional module 130 is registered. In the event listener registration processing, through the steps S510, S405, and S407, the number of active classes and the utilized memory amount of the individual functional module 130 are added. At this time, when any one of the number of active classes and the utilized memory amount is equal to or more than the converted upper limit value, through the steps S521 and S522 or the steps S419 and S420, the log information indicating that the number of active classes or the utilized memory amount of the individual functional module 130 reaches the upper limit is generated and simultaneously the error notification is performed, such that reading of the event listener class or generating of the instance is stopped.

When both of the number of active classes and the utilized memory amount are less than the converted upper limit value, through the steps S514, S410, and S416, the event listener class is read, the instance of the event listener class is generated, and the event listener of the generated instance is registered in the event listener execution list.

On the other hand, in the host terminal 100, the event listener control processing is executed through the execution of the common functional module 120. In the event listener control processing, through the steps S703 and S705, the utilized memory amount of the individual functional module 130, which is the source of the event listener to be executed, is added. At this time, when the utilized memory amount is equal to or more than the converted upper limit value, through the steps S715 and S716, the log information indicating that the memory amount to be utilized by the individual functional module 130 reaches the upper limit and simultaneously the error notification is performed, such that the execution of the event listener is stopped.

When the utilized memory amount is less than the converted upper limit value, through the step S710, the command included in the event listener is executed.

In such a manner, in the present embodiment, it is configured such that the resource amount to be utilized by the individual functional module 130 in the host terminal 100 is measured, the upper limit value is acquired from the individual functional module 130, the acquired upper limit value is converted into the upper limit value of the resource in the host terminal 100, and the log information indicating that the resource amount to be utilized by the individual functional module 130 reaches the upper limit on the basis of the measured resource amount and the converted upper limit value.

Accordingly, it is possible to verify whether or not the resource amount to be utilized by the individual functional module 130 in the network printer reaches the upper limit value of the resource, before the introduction into the network printer. Therefore, as compared with the related art, the software development can be easily performed, and software can be developed with high stability.

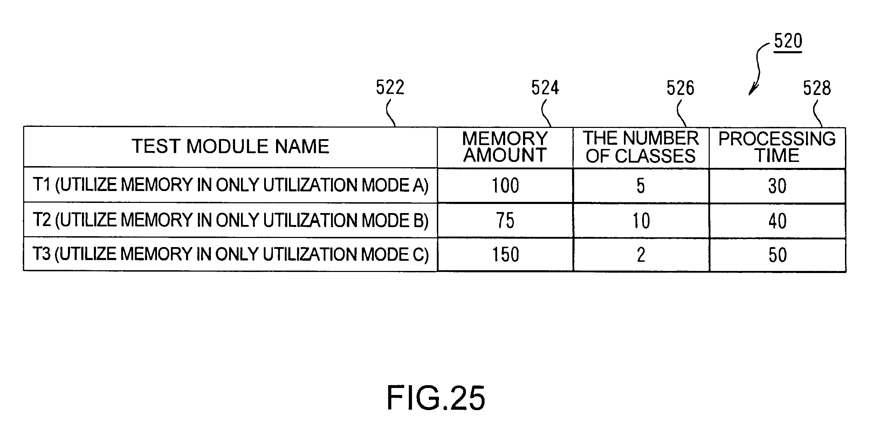

Next, a third embodiment of the invention will be described with reference to the drawings. Figs. 25 to 30 are diagrams showing a resource conversion table generation system, a resource conversion table generation program, and a resource conversion table generation method according to the third embodiment of the invention.

In the present embodiment, the resource conversion table generation system, the resource conversion table generation program, and the resource conversion table generation method according to the invention are applied to a case in which the resource conversion table 22 utilized in the first or second embodiment is generated. Moreover, only different parts from the first and second embodiments are described. The same parts as those in the first and second embodiments are represented by the same reference numerals, and thus the descriptions thereof will be omitted.

First, the configuration of the network printer will be described in detail.

The network printer is configured to have the same function as the general computer in which the CPU, the ROM, the RAM, the I/F, and the like are connected to one another via the bus.

To the I/F, an operation panel, such as a touch panel, which can be used to input and display data as a human interface, a storage device that stores data or tables as files, a printing head, a printer engine that has a head driving unit and other mechanisms required for printing, and a signal line for the connection to the network 199 are connected.

The storage device stores an execution result registration table in which the execution results of the test module in the network printer are registered.

Fig. 25 is a diagram showing the data structure of the execution result registration table 520.

In the execution result registration table 520, as shown in Fig. 25, one record is registered for each test module. Each record is configured to include a field 522 that registers the name of the test module, a field 524 that registers the memory amount to be utilized by the test module in the network printer, a field 526 that registers the number of classes to be activated by the test module in the network printer, and a field 528 that registers processing time of the test module.

In the example of Fig. 25, in the first record, 'Tl (UTILIZE MEMORY IN ONLY UTILIZATION MODE A)', '100', '5', and '30' are registered as the name of the test module, the memory amount, the number of classes, and the processing time, respectively. This represents that the test module T1 utilizes the memory in only the utilization mode A, through the execution of the test module T1, the memory amount of 100 [byte] is utilized in the network printer, and 30 classes are activated.

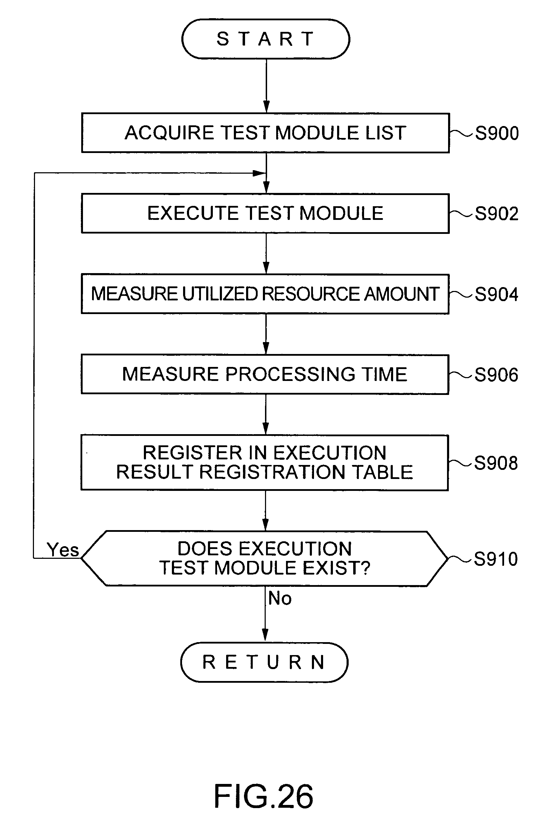

The CPU activates a predetermined program stored in a predetermined area of the ROM and executes a utilized resource amount measurement processing shown in Fig. 26 according to the program.

Fig. 26 is a flowchart showing the utilized resource amount measurement processing.

If the utilized resource amount measurement processing is executed in the CPU, as shown in Fig. 26, first, the process progresses to the step S900.

At the step S900, a test module list in which the test module to be executed is registered is acquired, and then the process progresses to the step S902. At the step S902, on the basis of the acquired test module list, the test module is executed, and then the process progresses to the step S904.

At the step S904, the memory amount to be used by the executed test module and the number of classes to be activated are measured, and then the process progresses to the step S906. At the step S906, the processing time of executed test module is measured, and then the process progresses to the step S908. At the step S908, the measured utilized memory amount, the number of active classes, and the measurement time are registered in the execution result registration table 520 in association with the name of the test module, and then the process progresses to the step S910.

At the step S910, on the acquired test module list, it is judged whether or not the test module to be executed exists and, when it is judged that the test module to be executed exists (Yes), the process progresses to the step S902. When it is judged that the test module to be executed does not exist (No), a series of steps end, and the process returns to an original state.

The execution result registration table 520 obtained by the utilized resource amount measurement processing is utilized to generate the resource conversion table 22 in the host terminal 100.

Next, the configuration of the host terminal 100 will be described in detail.

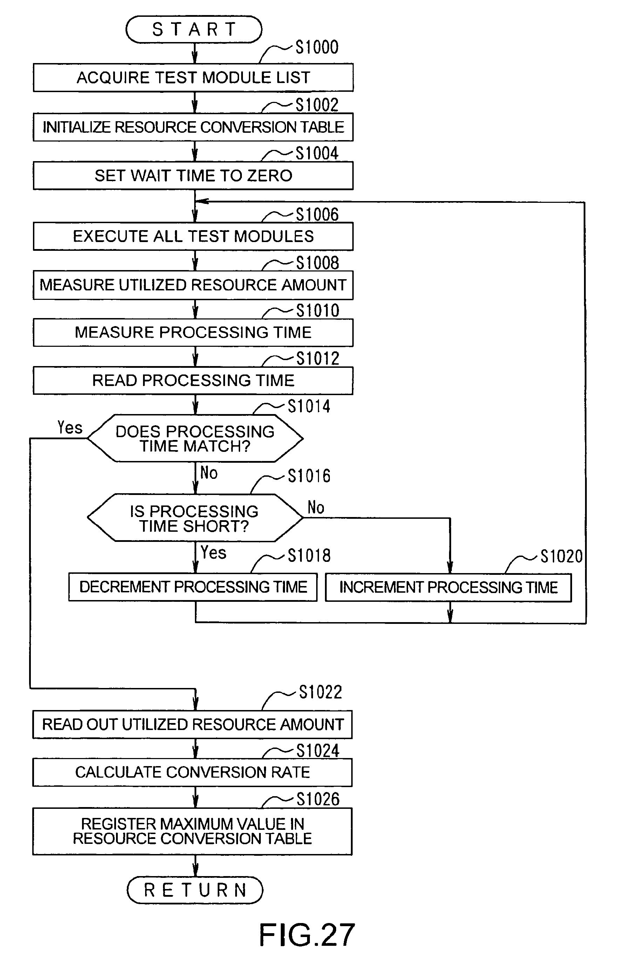

A CPU 30 activates a predetermined program stored in a predetermined area of a ROM 32 and executes a resource conversion table generation processing shown in Fig. 27 according to the program.

Fig. 27 is a flowchart showing the resource conversion table generation processing.

The resource conversion table generation processing is a processing which generates the resource conversion table 22 and simultaneously determines the processing time at the step S713. If the resource conversion table generation processing is executed in the CPU 30, as shown in Fig. 27, first, the process progresses to the step S1000.

At the step S1000, the test module list is acquired, and then the process progresses to the step S1002. At the step S1002, the resource conversion table 22 is initialized, and then the process progresses to the step S1004. At the step S1004, wait time is set to '0', and then the process progresses to the step S1006.

At the step S1006, on the acquired test module list, all the test modules are executed. Here, like the individual functional module 130, the test module is executed through the processings shown in Figs. 10 to 17, and 24. Therefore, the processing waits for the wait time in the step S713, such that the processing time is adjusted.

Next, the process progresses to the step S1008. At the step S1008, the memory amount to be used and the number of classes to be activated by each executed test module are measured, and then the process progresses to the step S1010. At the step S1010, the processing time of each executed test module is measured, and then the process progresses to the step S1012.

At the step S1012, the processing time corresponding to each test module is read out from the execution result registration table 520, and then the process progresses to the step S1014. At the step S1014, it is judged whether or not the total of the read-out processing time and the total of the processing time measured for the respective test modules match each other or the difference between them is equal to or less than a predetermined threshold value and, when it is judged that the totals of the processing time do not match each other or the difference between them is larger than the predetermined threshold value (No), the process progresses to the step S1016.

At the step S1016, it is judged whether or not the total of the read-out processing time is shorter than the total of the processing time measured for the respective test modules and, when it is judged that the total of the read-out processing time is shorter (Yes), the process progresses to the step S1018. At the step S1018, the wait time decrements by '1', and then the process progresses to the step S1006.

On the other hand, at the step S1016, when it is judged that the total of the processing time measured for the respective test modules is shorter (No), the process progresses to the step S1020. At the step S1020, the wait time increments by '1', and then the process progresses to the step S1006.

At the step S1014, when it is judged that the totals of the processing time match each other or the difference between them is equal to or less than the predetermined threshold value (Yes), the process progresses to the step S1022. At the step S1022, the utilized memory amount and the number of active classes corresponding to each test module are read out from the execution result registration table 520, and then the process progresses to the step S1024.

At the step S1024, for each test module, the conversion rate is calculated on the basis of the utilized memory amount and the number of active classes measured for the test module, and the utilized memory amount and the number of active classes corresponding to the test module from the read-out utilized memory amounts and the numbers of active classes, and then the process progresses to the step S1026. At the step S1026, for each resource type and each utilization mode, the maximum from the conversion rates calculated for the respective test modules is registered in the resource conversion table 22. Next, a series of steps end, and the process returns to an original state.

Next, the operation of the present embodiment will be described.

In the network printer, through the steps S902 to S908 repeatedly, each test module is executed, the utilized memory amount, the number of active classes, and the processing time of the executed test module are measured, and the measured utilized memory amount, the number of active classes, and the processing time are registered in the execution result registration table 520.

Next, the execution result registration table 520 obtained in the network printer is stored in the host terminal 100, and the resource conversion table generation processing is executed in the host computer 100.

In the host terminal 100, through the steps S1006 to S1010, each test module is executed, and the processing time of the executed test module is measured. Next, through the steps S1012 and S1014, the processing time corresponding to each test module is read out from the execution result registration table 520, and it is judged whether or not the total of the read-out processing time and the total of the processing time measured for the respective test modules match each other. As a result, when it is judged that the totals of the processing time do not match each other and when the total of the read-out processing time is shorter, through the step S1018, the wait time is decreased. On the other hand, when the total of the processing time measured for the respective test modules is shorter, through the step S1020, the wait time is increased. The processing of the steps S1006 to S1020 is repeatedly performed until the totals of the processing match each other.

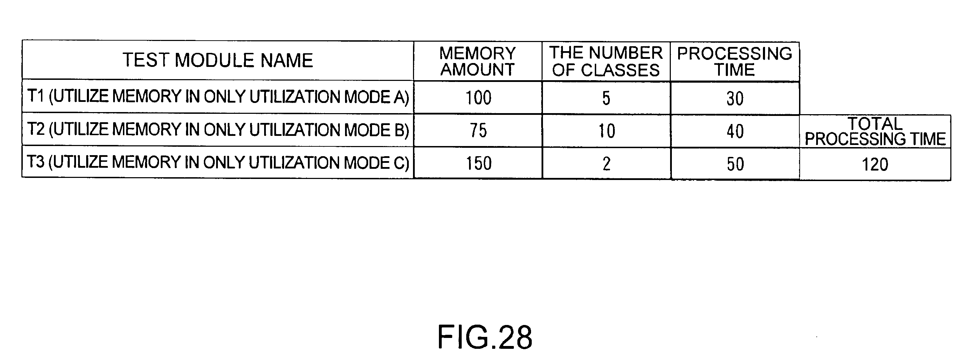

Fig. 28 is a table showing the execution results when three test modules T1 to T3 are executed in the network printer.

When the test modules T1 to T3 are executed in the network printer, the total of the processing times of the test modules T1 to T3 becomes '120', for example, as shown in Fig. 28.

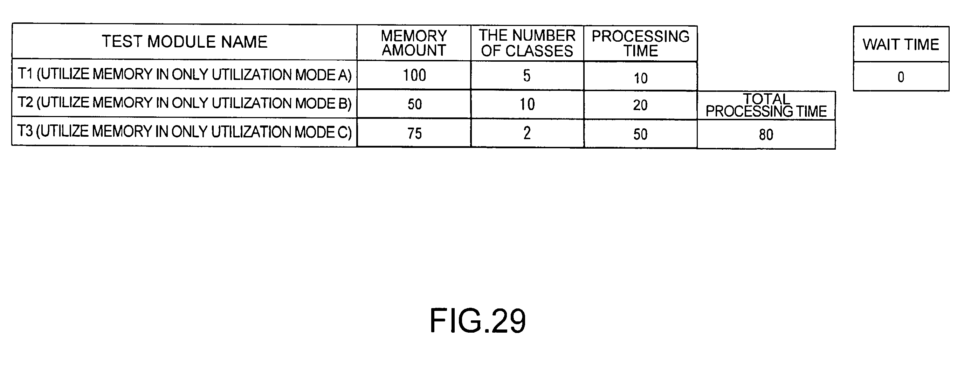

Fig. 29 is a table showing the execution results when the wait time is set to '0' and when three test modules T1 to T3 are executed in the host terminal 100.

When the wait time is set to '0' and when the test modules T1 to T3 are executed in the host terminal 100, the total of the processing time of the test modules T1 to T3 becomes '80', for example, as shown in Fig. 29. In this case, since the total of the processing time in the network printer and the total of the processing time in the host terminal 100 do not match each other, the wait time is increased such that the wait time is adjusted.

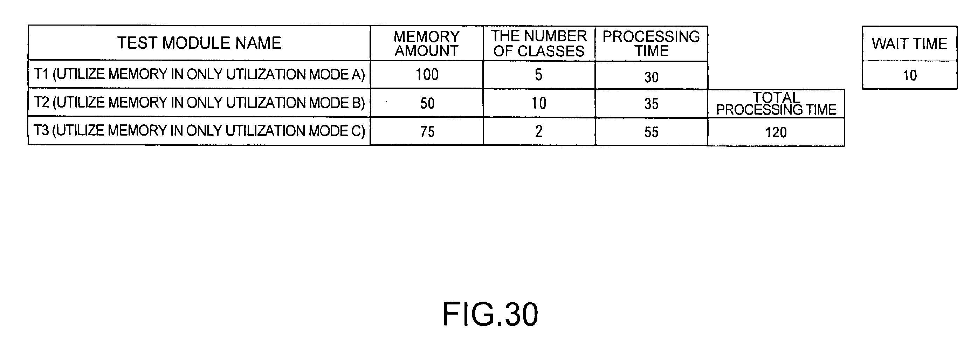

Fig. 30 is a table showing the execution results when the wait time is set to '10' and when three test modules T1 to T3 are executed in the host terminal 100.

Next, when the wait time is set to '10' and when the test modules T1 to T3 are executed in the host terminal 100, the total of the processing time of the test modules T1 to T3 becomes '120', for example, as shown in Fig. 30. In this case, since the total of the processing time in the network printer and the total of the processing time in the host terminal 100 match each other, the wait time is determined as '10'.

As such, if the wait time is determined, through the steps S1022 and S1024, the utilized memory amount and the number of active classes corresponding to each test module are read out from the execution result registration table 520 and, for each test module, the conversion rate is calculated on the basis of the measured utilized memory amount and the number of active classes, and the read-out utilized memory amount and the number of active classes. And then, through the step S1026, the maximum from the conversion rate calculated for the respective test modules is registered in the resource conversion table 22.

The wait time and the resource conversion table 22 obtained through such a processing can be utilized in the first and second embodiments.

In such a manner, in the present embodiment, it is configured such that the resource amount to be utilized by the test module in the network printer is read out from the execution result registration table 520, the resource amount to be utilized by the test module in the host terminal 100 is measured, the conversion rate is calculated on the basis of the read-out resource amount and the measured resource amount, and the resource conversion table 22 is generated on the basis of the calculated conversion rate.

Accordingly, only by executing the test modules in the host terminal 100 and the network printer, the resource conversion table 22 can be easily generated.

Further, in the present embodiment, it is configured such that the processing time of the test module in the network printer is read out from the execution result registration table 520, the processing time of the test module in the host terminal 100 is measured, and the wait time in the host terminal 100 is calculated on the basis of the read-out processing time and the measured processing time.

Accordingly, when the individual functional module 130 is executed in the host terminal 100, if the obtained wait time is provided during the execution, it is possible to adjust such that the processing time of the individual functional module 130 in the host terminal 100 and the processing time of the individual functional module 130 in the network printer are equal to each other.

In the third embodiment, the step S1008 corresponds to the resource measuring unit according to the thirteenth or fourteenth aspect of the invention or the measuring of the resource amount according to one of the twenty-ninth, thirtieth, forty-eighth to fiftieth aspects of the invention, and the step S1010 corresponds to the processing time measuring unit according to the fifteenth aspect of the invention or the measuring of the processing time according to the thirty-first or fifty-first aspect of the invention. Further, the step S1012 corresponds to the processing time information acquiring unit according to the fifteenth aspect of the invention or the acquiring of the processing time information according to the thirty-first or forty-first aspect of the invention, and the steps S1018 and S1020 correspond to the wait time calculating unit according to the fifteenth aspect of the invention or the calculating of the wait time according to the thirty-first or fifty-first aspect of the invention.

Further, in the third embodiment, the step S1022 corresponds to the utilization resource information acquiring unit according to the thirteenth aspect of the invention or the acquiring of the utilization resource information according to the twenty-ninth, forty-eighth, or forty-ninth aspect of the invention, and the step S1024 corresponds to the conversion rate calculating unit according to the thirteenth aspect of the invention or the calculating of the conversion rate according to the twenty-ninth, forty-eighth, or forty-ninth aspect of the invention. Further, the step S1026 corresponds to the resource conversion table generating unit according to the thirteenth aspect of the invention or the generating the resource conversion table according to the twenty-ninth, forty-eighth, or forty-ninth aspect of the invention, and the CPU 30 corresponds to the arithmetic unit according to the forty-ninth aspect of the invention.

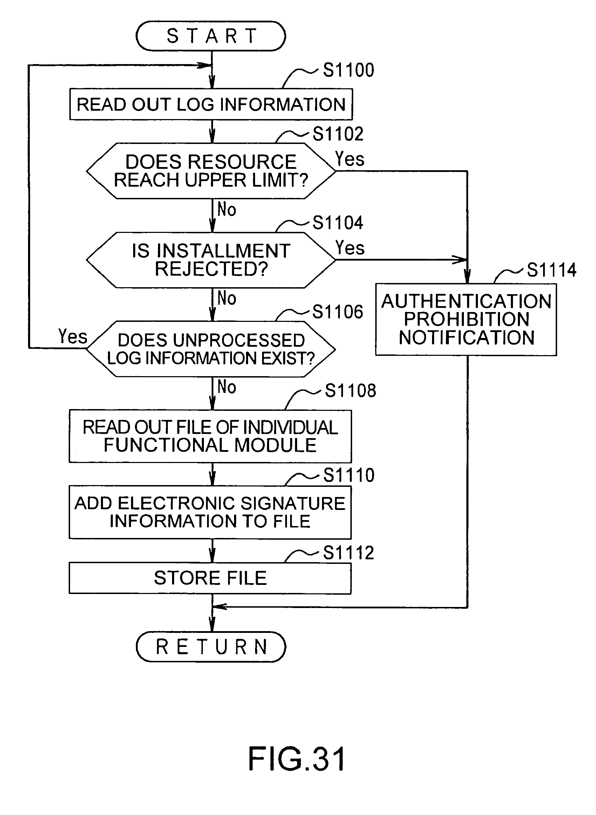

Next, a fourth embodiment of the invention will be described with reference to the drawings. Fig. 31 is a diagram showing a software authentication system, a software authentication program, and a software authentication method according to the fourth embodiment of the invention.

In the present embodiment, the software authentication system, the software authentication program, and the software authentication method according to the invention are applied to a case in which the authentication of the individual functional module 130 is performed on the basis of the log information generated in the first or second embodiment. Hereinafter, only different parts from the first and second embodiments are described. The same parts as those in the first and second embodiments are represented by the same reference numerals, and thus the descriptions thereof will be omitted.

First, the configuration of the host terminal 100 will be described in detail.

A CPU 30 activates a predetermined program stored in a predetermined area of a ROM 32 and executes a module authentication processing shown in a flowchart of Fig. 31 according to the program.

Fig. 31 is a flowchart showing the module authentication processing.

If the module authentication processing is executed in the CPU 30, as shown in Fig. 31, first, the process progresses to the step S1100.

At the step S1100, the log information is read out from the log file of the storage device 42, and then the process progresses to the step S1102. At the step S1102, on the basis of the read-out log information, it is judged whether or not the number of active classes or the utilized memory amount of the individual functional module 130 reaches the upper limit and, when it is judged that the number of active classes or the utilized memory amount does not reach the upper limit (No), the process progresses to the step S1104.

At the step S1104, on the basis of the read-out log information, it is judged whether or not the individual functional module 130 cannot be installed in the network printer and, when it is judged that the individual functional module 130 can be installed (No), the process progresses to the step S1106.

At the step S1106, it is judged whether or not unprocessed log information exists in the log filed of the storage device 42 and, when it is judged that the unprocessed log information does not exist (No), the process progresses to the step S1108. At the step S1108, an execution file of the individual functional module 130 is read out from the storage device 42, and then the process progresses to the step S1110.

At the step S1110, the electronic signature information is added to the read-out execution file, and then the process progresses to the step S1112. At the step S1112, the execution file with the electronic signature information added thereto is stored in the storage device 42. Next, a series of steps end, and the process returns to an original state.

On the other hand, at the step S1106, when it is judged that the unprocessed log information exists (Yes), the process progresses to the step S1100.

At the step S1104, when it is judged that the individual functional module 130 cannot be installed (Yes) or, at the step S1102, when it is judged that the number of active classes or the utilized memory amount reaches the upper limit (Yes), the process progresses to the step S1114. At the step S1114, a message indicating that the authentication of the individual functional module 130 cannot be performed is displayed on the display device 44. Next, a series of steps end, and the process returns to an original state.

Next, the operation of the present embodiment will be described.

In the host terminal 100, if the log file in the first or second embodiment is generated, through the steps S1100 to S1106 repeatedly, the log information is sequentially read out from the log file, and it is judged whether or not the number of active classes or the utilized memory amount of the individual functional module 130 reaches the upper limit or it is judged whether or not the individual functional module 130 cannot be installed in the network printer. Like the log file shown in Fig. 19, for all the log information included in the log file, if it is judged that the number of active classes or the utilized memory amount does not reach the upper limit or that the individual functional module 130 can be installed, through the steps S1108 to S1112, the execution file of the individual functional module 130 is read out, the electronic signature information is added to the read-out execution file, and then the execution file with the electronic signature information added thereto is stored.

Like the log file shown in Fig. 18, for any log information included in the log file, if it is judged that the number of active classes or the utilized memory amount reaches the upper limit or that the individual functional module 130 cannot be installed, through the step S1114, a message indicating authentication prohibition is displayed.

In such a manner, in the present embodiment, it is configured such that the log information is read out from the log file, it is judged on the basis of the read-out log information whether or not the resource amount to be utilized by the individual functional module 130 reaches the upper limit, and, when it is judged that the resource amount does not reach the upper limit, the electronic signature information is added to the execution file of the individual functional module 130.

Accordingly, since the electronic signature information is added to only the individual functional module 130 in which the resource to be utilized does not reach the upper limit, it is possible to accurately assure the operation of the individual functional module 130.

Further, in the present embodiment, it is configured such that the log information is read out from the log file, it is judged on the basis of the read-out log information whether or not the individual functional module 130 cannot be installed in the network printer, and, when it is judged that the individual functional module 130 can be installed, the electronic signature information is added to the execution file of the individual functional module 130.

Accordingly, since the electronic signature information is added to only the individual functional module 130 which can be installed in the network printer, it is possible to accurately assure the operation of the individual functional module 130.

In the fourth embodiment, the step S1100 corresponds to the log information acquiring unit according to the sixteenth aspect of the invention or the acquiring the log information according to the thirty-second, fifty-second, or fifty-third aspect of the invention, and the step S1102 corresponds to the operation verifying unit or the judging according to the thirty-second, fifty-second, or fifty-third aspect of the invention. Further, the step S1110 corresponds to the software authentication unit according to the sixteenth aspect of the invention or the adding the authentication information according to the thirty-second, fifty-second, or fifty-third aspect of the invention, and the CPU 30 corresponds to the arithmetic unit according to the fifty-third aspect of the invention.

Moreover, in the first and second embodiments, the resource conversion table 22 is configured such that the maximum from the conversion rates determined for the respective test modules is registered therein. However, the invention is not limited to this configuration. For example, the resource conversion table 22 may be configured such that the average of the conversion rates determined for the respective test modules is registered therein.

Accordingly, since the average of the conversion rates determined for the respective test modules is registered in the resource conversion table 22, it is possible to assure the operation of the functional module with reliability to a certain degree and simultaneously the resource amount to be utilized in the network printer can be suppressed.

Further, in the first and second embodiments, it is configured to generate the log information indicating that the resource amount to be utilized by the individual functional module 130 reaches the upper limit. However, the invention is not limited to this configuration. For example, it may be configured to cause the display device 44 to display a message indicating that the resource amount to be utilized by the individual functional module 130 reaches the upper limit.

Further, in the first and second embodiments, the example in which the conversion rate of '1' is registered in the resource conversion table 22 is described. However, the invention is not limited to this example. For example, according to the specification difference between the host terminal 100 and the network printer, other values may be registered.

Further, in the first and second embodiments, it is configured such that the utilized memory amount and the number of active classes are limited as the resource amount, but the invention is not limited to this configuration. For example, it may be configured such that the number of socket connections, the number of file connections, the number of files, a file capacity, a class size, a ZIP memory capacity, a CPU utilization amount, a socket traffic amount, and a file read/write amount are limited.

Further, in the first to fourth embodiments, as for the execution of the processings shown in the flowcharts of Figs. 10 to 17, 24, 27, and 31, the case in which the control program stored in the ROM 32 in advance is executed is described, but the invention is not limited to this case. For example, a program showing the procedures of the processings may be stored in a storage medium, and the program may be read in the RAM 34 of the network printer to be executed.

Further, in the third embodiment, as for the execution of the processings shown in the flowcharts of Fig. 26, the case in which the control program stored in the ROM of the network printer in advance is executed is described, but the invention is not limited to this case. For example, a program showing the procedures of the processings may be stored in a storage medium, and the program may be read in the RAM of the network printer to be executed.

Here, as the storage medium, a semiconductor recordable storage medium, such as the RAM or ROM, a magnetic storage medium, such as the FD or HD, an optical readable storage medium, such as the CD, CDV, LD, or DVD, and a magnetic recordable/optical readable storage medium, such as the MO, may be included. Further, regardless of a reading method, such as an electronic, magnetic, or optical reading method, all the computer-readable storage mediums are included.

Further, in the first to fourth embodiments, the resource management system, the resource conversion table generation system, the software authentication system, the resource management program, the resource conversion table generation program, the software authentication program, the resource management method, the resource conversion table generation method, and the software authentication method according to the invention are applied to the case in which the JAVA (Registered Trademark) class set is emulated in order to control the operation of the network printer in the execution environment of the JAVA (Registered Trademark) application on the host terminal 100. However, the invention is not limited to this case and may be applied to other cases within the scope without departing from the subject matter of the invention. For example, instead of the network printer, the invention can be applied to a projector, an electronic paper, a home gateway, a personal computer, a PDA (Personal Digital Assistant), a network storage, an audio instrument, a cellular phone, PHS (Registered Trademark) (Personal Handyphone System), a watch-type PDA, an STB (Set Top Box), a POS (Point Of Sale) terminal, a facsimile machine, a phone (including an IP phone or the like), and other devices.

## Claims

1. A resource management system which manages resources to be utilized by a functional module, the resource management system comprising:
a resource measuring unit that measures a resource amount to be utilized by the functional module in a first execution environment;
a resource converting unit that converts the resource amount measured by the resource measuring unit into a resource amount to be utilized by the functional module in a second execution environment;
a resource limitation information acquiring unit that acquires resource limitation information indicating a resource limitation condition; and
a resource limitation notifying unit that performs a notification on resource limitation on the basis of the resource amount converted by the resource converting unit and the resource limitation information acquired by the resource limitation information acquiring unit.

2. A resource management system which manages resources to be utilized by a first functional module and a plurality of second functional modules, which require the first functional module at the time of execution, the resource management system comprising:
a resource measuring unit that measures a resource amount to be utilized by the second functional modules in a first execution environment;
a resource converting unit that converts the resource amount measured by the resource measuring unit into a resource amount to be utilized by the second functional modules in a second execution environment;
a resource limitation information acquiring unit that acquires resource limitation information indicating a resource limitation condition in the second execution environment; and
a resource limitation notifying unit that performs a notification on resource limitation on the basis of the resource amount converted by the resource converting unit and the resource limitation information acquired by the resource limitation information acquiring unit.

3. The resource management system according to claim 2,
wherein the resource measuring unit is configured to measure the resource amount to be utilized by the second functional modules in the first execution environment, and a resource amount to be utilized by the first functional module in the first execution environment for the execution of the second functional modules.

4. A resource management system which manages resources to be utilized by a first functional module and a plurality of second functional modules, which require the first functional module at the time of execution, the resource management system comprising:
a resource measuring unit that measures a resource amount to be utilized by the first functional module in a first execution environment for the execution of the second functional modules;
a resource converting unit that converts the resource amount measured by the resource measuring unit into a resource amount to be utilized by the second functional modules in a second execution environment;
a resource limitation information acquiring unit that acquires resource limitation information indicating a resource limitation condition in the second execution environment; and
a resource limitation notifying unit that performs a notification on resource limitation on the basis of the resource amount converted by the resource converting unit and the resource limitation information acquired by the resource limitation information acquiring unit.

5. The resource management system according to claim 2, further comprising:
a resource limiting unit that prohibits the functional modules from assuring the resource on the basis of the resource amount converted by the resource converting unit and the resource limitation information acquired by the resource limitation information acquiring unit.

6. The resource management system according to claim 1,
wherein the resource converting unit performs the conversion on the basis of a resource conversion table in which conversion rates are registered, the conversion rates being determined on the basis of a resource amount to be utilized in the first execution environment under a predetermined condition and a resource amount to be utilized in the second execution environment under the predetermined condition.

7. The resource management system according to claim 6,
wherein the resource conversion table registers the conversion rates according to individual resource types, and
the resource converting unit acquires the corresponding conversion rate from the resource conversion table according to the resource type to be utilized by the functional module, and performs the conversion on the basis of the acquired conversion rate.

8. The resource management system according to claim 6,
wherein the resource conversion table registers the conversion rates according to individual resource utilization modes, and
the resource converting unit acquires the corresponding conversion rate from the resource conversion table according to the resource utilization mode by the functional module, and performs the conversion on the basis of the acquired conversion rate.

9. The resource management system according to claim 6,
wherein, when the conversion rate is determined on the basis of resource amounts to be utilized by each of a plurality of test modules in the first execution environment and the second execution environment, the maximum from the conversion rates determined for the respective test modules is registered in the resource conversion table.

10. The resource management system according to claim 6,
wherein, when the conversion rate is determined on the basis of resource amounts to be utilized by each of a plurality of test modules in the first execution environment and the second execution environment, the average of the conversion rates determined for the respective test modules is registered in the resource conversion table.

11. The resource management system according to claim 1,
wherein the resource limitation notifying unit is configured to display a message indicating that the resource amount to be utilized by the functional module reaches an upper limit.

12. The resource management system according to claim 1,
wherein the resource limitation notifying unit is configured to generate log information indicating that the resource amount to be utilized by the functional module reaches an upper limit.

13. A resource conversion table generation system which generates a resource conversion table for converting a resource amount to be utilized in a first execution environment and a resource amount to be utilized in a second execution environment, the resource conversion table generation system comprising:
a utilization resource information acquiring unit that acquires utilization resource information indicating a resource amount to be utilized under a predetermined condition in the second execution environment;
a resource measuring unit that measures a resource amount to be utilized under the predetermined condition in the first execution environment;
a conversion rate calculating unit that calculates a conversion rate on the basis of the utilization resource information acquired by the utilization resource information acquiring unit and the resource amount measured by the resource measuring unit; and
a resource conversion table generating unit that generates the resource conversion table on the basis of the conversion rate calculated by the conversion rate calculating unit.

14. The resource conversion table generation system according to claim 13,
wherein the utilization resource information is information representing a resource amount to be utilized by a test module in the second execution environment, and
the resource measuring unit is configured to measure a resource amount to be utilized by the test module in the first execution environment.

15. The resource conversion table generation system according to claim 14, further comprising:
a processing time information acquiring unit that acquires processing time information indicating processing time of the test module in the second execution environment;
a processing time measuring unit that measures processing time of the test module in the first execution environment; and
a wait time calculating unit that calculates wait time in the first execution environment on the basis of the processing time information acquired by the processing time information acquiring unit and the processing time measured by the processing time measuring unit.

16. A software authentication system which performs software authentication on the basis of log information generated by the resource management system according to claim 12, the software authentication system comprising:
a log information acquiring unit that acquires the log information;
an operation verifying unit that, on the basis of the log information acquired by the log information acquiring unit, judges whether or not a resource amount to be utilized by a functional module reaches an upper limit; and
a software authentication unit that, when it is judged by the operation verifying unit that the resource amount does not reach the upper limit, adds authentication information to software.

17. A resource management program which manages resources to be utilized by a functional module, the resource management program including a program which causes a computer to execute:
measuring a resource amount to be utilized by the functional module in a first execution environment;
converting the resource amount measured in the measuring of the resource amount into a resource amount to be utilized by the functional module in a second execution environment;
acquiring resource limitation information indicating a resource limitation condition; and
performing a notification on resource limitation on the basis of the resource amount converted in the converting the resource amount and the resource limitation information acquired in the acquiring of the resource limitation information.

18. A resource management program which manages resources to be utilized by a first functional module and a plurality of second functional modules, which require the first functional module at the time of execution, the resource management program including a program which causes a computer to execute:
measuring a resource amount to be utilized by the second functional modules in a first execution environment;
converting the resource amount measured in the measuring of the resource amount into a resource amount to be utilized by the second functional modules in a second execution environment;
acquiring resource limitation information indicating a resource limitation condition in the second execution environment; and
performing a notification on resource limitation on the basis of the resource amount converted in the converting of the resource amount and the resource limitation information acquired in the acquiring of the resource limitation information.

19. A resource management program which manages resources to be utilized by a first functional module and a plurality of second functional modules, which require the first functional module at the time of execution, the resource management program including a program which causes a computer to execute:
measuring a resource amount to be utilized by the first functional module in the first execution environment for the execution of the second functional modules;
converting the resource amount measured in the measuring the resource amount into a resource amount to be utilized by the second functional modules in a second execution environment;
acquiring resource limitation information indicating a resource limitation condition in the second execution environment; and
performing a notification on resource limitation on the basis of the resource amount converted in the converting of the resource amount and the resource limitation information acquired in the acquiring of the resource limitation information.

20. A resource conversion table generation program which generates a resource conversion table for converting a resource amount to be utilized in a first execution environment and a resource amount to be utilized in a second execution environment, the resource conversion table generation program including a program which causes a computer to execute:
acquiring utilization resource information indicating a resource amount to be utilized under a predetermined condition in the second execution environment;
measuring a resource amount to be utilized under the predetermined condition in the first execution environment;
calculating a conversion rate on the basis of the utilization resource information acquired in the acquiring of the utilization resource information and the resource amount measured in the measuring of the resource amount; and
generating the resource conversion table on the basis of the conversion rate calculated in the calculating of the conversion rate.

21. A software authentication program which performs software authentication on the basis of log information generated by the resource management system according to claim 12, the software authentication program including a program which causes a computer to execute:
acquiring the log information;
verifying an operation by judging, on the basis of the log information acquired in the acquiring of the log information, whether or not a resource amount to be utilized by a functional module reaches an upper limit; and
authentificating software by, when it is judged in the judging that the resource amount does not reach the upper limit, adding authentication information to software.

22. A resource management method which manages resources to be utilized by a functional module, the resource management method comprising:
measuring a resource amount to be utilized by the functional module in a first execution environment;
converting the resource amount measured in the measuring of the resource amount into a resource amount to be utilized by the functional module in a second execution environment;
acquiring resource limitation information indicating a resource limitation condition; and
performing a notification on resource limitation on the basis of the resource amount converted in the converting of the resource amount and the resource limitation information acquired in the acquiring of the resource limitation information.

23. A resource management method which manages resources to be utilized by a first functional module and a plurality of second functional modules, which require the first functional module at the time of execution, the resource management method comprising:
measuring a resource amount to be utilized by the second functional modules in a first execution environment;
converting the resource amount measured in the measuring of the resource amount into a resource amount to be utilized by the second functional modules in a second execution environment;
acquiring resource limitation information indicating a resource limitation condition in the second execution environment; and
performing a notification on resource limitation on the basis of the resource amount converted in the converting of the resource amount and the resource limitation information acquired in the acquiring of the resource limitation information.

24. A resource management method which manages resources to be utilized by a first functional module and a plurality of second functional modules, which require the first functional module at the time of execution, the resource management method comprising:
measuring a resource amount to be utilized by the first functional module in the first execution environment for the execution of the second functional modules;
converting the resource amount measured in the measuring of the resource amount into a resource amount to be utilized by the second functional modules in a second execution environment;
acquiring resource limitation information indicating a resource limitation condition in the second execution environment; and
performing a notification on resource limitation on the basis of the resource amount converted in the converting of the resource amount and the resource limitation information acquired in the acquiring of the resource limitation information.

25. A resource conversion table generation method which generates a resource conversion table for converting a resource amount to be utilized in a first execution environment and a resource amount to be utilized in a second execution environment, the resource conversion table generation method comprising:
acquiring utilization resource information indicating a resource amount to be utilized under a predetermined condition in the second execution environment;
measuring a resource amount to be utilized under the predetermined condition in the first execution environment;
calculating a conversion rate on the basis of the utilization resource information acquired in the acquiring of the utilization resource information and the resource amount measured in the measuring of the resource amount; and
generating the resource conversion table on the basis of the conversion rate calculated in the calculating of the conversion rate.

26. A software authentication method which performs software authentication on the basis of log information generated by the resource management system according to claim 12, the software authentication method comprising:
acquiring the log information;
verifying an operation by judging, on the basis of the log information acquired in the acquiring of the log information, whether or not a resource amount to be utilized by a functional module reaches an upper limit; and
when it is judged in the verificating of the operation that the resource amount does not reach the upper limit, adding authentication information to the software.
